# EUROPÄISCHE PATENTSCHRIFT

(11) **EP 3 718 185 B1**
(45) Veröffentlichungstag und Bekanntmachung des Hinweises auf die Patenterteilung: **06.05.2026**
(21) Anmeldenummer: 18800130.9
(22) Anmeldetag: 08.11.2018
(51) Int. Cl.: H02G 1/12

(54) **ABISOLIERZANGE**
STRIPPING PLIERS
PINCE À DÉNUDER

(30) Priorität: 29.11.2017 DE 102017128226
(43) Veröffentlichungstag der Anmeldung: 07.10.2020
(73) Patentinhaber: Rennsteig Werkzeuge GmbH, 98587 Steinbach-Hallenberg (DE)
(72) Erfinder: HOLLAND-MORITZ, Georg, 98587 Steinbach-Hallenberg (DE); BRÜCKNER, Michael, 98587 Steinbach-Hallenberg (DE); LEGLER, Ralf, 98587 Altersbach (DE)
(74) Vertreter: Müller, Enno
(86) Internationale Anmeldenummer: PCT/EP2018/080587
(87) Internationale Veröffentlichungsnummer: WO 2019/105707

(56) Entgegenhaltungen:
- EP-A1- 3 054 541
- EP-A2- 0 645 861
- EP-A2- 1 557 920
- EP-B1- 1 557 920
- DE-A1- 4 420 006

## Beschreibung

### Gebiet der Technik

Die Erfindung betrifft eine Abisolierzange nach den Merkmalen des Oberbegriffes des Anspruches 1.

### Stand der Technik

Abisolierzangen der in Rede stehenden Art sind bekannt. Diese dienen zum Abisolieren von elektrischen Kabeln. In diesem Zusammenhang sind sogenannte Automatik-Abisolierzangen bekannt, die in einem Arbeitsgang die Isolation einschneiden und nachfolgend im Zuge des weiteren Zusammendrückens der Griffteile von dem Leiter abziehen. Die Schneidtiefe der Schneidbacken ist hierbei anzupassen an die Dicke der Isolationsschicht, um den freizulegenden Leiter nicht zu beschädigen.

In diesem Zusammenhang sind Abisolierzangen bekannt, welche selbsttätig eine Schneidtiefeneinstellung der Schneidbacken in Abhängigkeit von der Kabeldicke vornehmen. Es wird beispielsweise auf die EP 1 557 920 B1 (US 7,513,177 B2) verwiesen, worin eine Abisolierzange nach den Merkmalen des Oberbegriffes des Anspruches 1 offenbart wird.

Aus der EP 3054541 A1 ist eine Abisolierzange bekannt, bei welcher eine Schneidtiefe der Schneiden der Schneidbacken lediglich manuell und in einer ausführbar beschriebenen Ausführungsform nur auf einer Seite einstellbar ist.

### Zusammenfassung der Erfindung

Ausgehend von dem zunächst genannten Stand der Technik beschäftigt sich die Erfindung mit der Aufgabenstellung, eine Abisolierzange, wie sie aus der EP 1557920 B1 bekannt ist, derart vorteilhaft weiterzubilden, dass eine verfeinerte Schneidtiefeneinstellung erreichbar ist.

Diese Aufgabe wird gemäß der Erfindung durch den Gegenstand des Anspruches 1 gelöst.

Zufolge der vorgeschlagenen Ausgestaltung ist neben einer selbsttätigen Anpassung der Schneidtiefe zufolge der Ermöglichung einer Relativverlagerung des Kulissenteils, auf welchem sich die zugeordnete Schneidbacke abstützt, wie dies weiter aus dem vorzitierten Stand der Technik bekannt ist, auch zusätzlich eine manuelle Verstellbarkeit des Kulissenteils ermöglicht.

Erfahrungsgemäß kann die Dicke der einzuschneidenden und abschließend abzuziehenden Isolation auch bei beispielsweise unterschiedlichen Chargen oder von unterschiedlichen Herstellern stammenden Kabeln mit gleichem Leiterquerschnitt variieren. In solchen Fällen kann eine zusätzliche Justage der Schneidtiefe zufolge der vorgeschlagenen Lösung vorgenommen werden. Die Relativverlagerung des Kulissenteils zu der zugeordneten Kulisse ist hierbei unabhängig von einer Schließstellung der Klemmbacken.

Im Hinblick auf die manuelle zusätzliche Verstellung kann eine geeignete Handhabe an der Abisolierzange vorgesehen sein, mit deren Hilfe die sich im Zuge der Nutzung der Abisolierzange automatisch einstellende Schneidtiefe der Schneidbacken zusätzlich verringerbar oder auch vergrößerbar ist.

Eine Zangenbacke ist feststehend und eine Zangenbacke ist beweglich vorgesehen, zufolge einer Drehbewegung relativ zu der feststehenden Zangenbacke. Die feststehende Zangenbacke kann hierbei fest mit dem zugehörigen Griffteil verbunden sein, während die bewegliche Zangenbacke gegebenenfalls nur mittelbar mit dem zweiten Griffteil verbunden ist, beispielsweise in bekannter Weise über einen Hebelmechanismus, der eine Verschwenkung der beweglichen Zangenbacke relativ zu der feststehenden Zangenbacke bei einem Zusammendrücken der Griffteile bewirkt.

Entsprechend der Erfindung ist das Kulissenteil an der beweglichen Zangenbacke hinsichtlich einer (geometrischen) Drehachse verschiebbar gelagert. Die Verlagerbarkeit des Kulissenteils relativ zu der zugeordneten Kulisse ist bevorzugt begrenzt. Ein möglicher Verlagerungsweg des Kulissenteils kann sich zufolge der bekannten selbsttätigen Schneidtiefeneinstellung in Abhängigkeit von der Kabeldicke einstellen. Darüber hinaus ist die Möglichkeit eines manuellen Eingriffs geschaffen, mit dem eine Ausgangslage des Kulissenteils zu der Kulisse verändert werden kann. Aus dieser gegebenenfalls veränderten Ausgangslage erfolgt im Zuge des Zusammendrückens der Griffteile die Relativverlagerung des Kulissenteils zu der Kulisse.

In weiterer Einzelheit ist das Kulissenteil bevorzugt vermittels einer drehbar mit dem Kulissenteil verbundenen Koppelstange und/ oder einem drehbar mit dem Kulissenteil verbundenen Lenker verschiebbar. Die tatsächlich sich einstellenden Drehwinkel im Zuge einer Abisolierung sind hierbei vergleichsweise gering, beispielsweise nur im Bereich einstelliger Winkelgrade oder bis beispielsweise hin zu 20 Winkelgraden. Eine zwischen der Koppelstange und/oder dem Lenker und dem Kulissenteil ausgebildete Drehachse kann weiter bevorzugt zur Änderung der relativen Ausgangslage genutzt sein. Beispielsweise kann die Drehachse als Exzenterteil ausgebildet sein, so dass sich ausgehend von einer geometrischen Drehachse hierdurch der Abstand zu dem Kulissenteil verändern lässt.

Die grundsätzlich gegebene verschiebbare Drehlagerung einer solchen Drehachse bietet die nötige Beweglichkeit bei gleichzeitiger Führung.

Die Drehachse ist somit bezüglich der beweglichen Zangenbacke und/oder bezüglich der feststehenden Zangenbacke unabhängig von einer Schließstellung der Klemmbacken zueinander einstellbar. Zufolge Veränderung der Ausgangsstellung der Drehachse ist eine Feinjustierung der automatischen Schneidtiefenanpassung erreichbar.

Es sind zwei Kulissenteile vorgesehen, wobei ein erstes Kulissenteil auf die der beweglichen Zangenbacke zugeordnete Schneidbacke einwirkt und ein zweites Kulissenteil auf die der feststehenden Zangenbacke zugeordnete Schneidbacke. Das erste Kulissenteil wirkt mit einer ersten Kulisse in der beweglichen Zangenbacke zusammen, das zweite Kulissenteil mit einer zweiten Kulisse in der feststehenden Zangenbacke.

Weiter ist die Verlagerung der Kulissenteile relativ zu den Kulissen beziehungsweise der zugeordneten Zangenbacke gekoppelt, so dass gemäß dem zitierten Stand der Technik gleiche Verlagerungsstrecken der Kulissenteile im Zuge der Handhabung der Abisolierzange gegeben sind. Auch bei der erfindungsgemäß vorgeschlagenen manuellen Einstellbarkeit unabhängig von einer Schließstellung der Klemmbacken ist in bevorzugter Ausgestaltung eine gleiche Einwirkung auf beide Kulissenteile gegeben.

Das der beweglichen Zangenbacke zugeordnete Kulissenteil ist in der feststehenden Zangenbacke über eine in einem ersten Langloch geführte erste Achse gelagert. Die hierdurch gebildete Drehachse erstreckt sich in bevorzugter Ausgestaltung quer zu einer Verlagerungsrichtung des Kulissenteils, wie auch quer zu einer Verlagerungsrichtung der zugeordneten Schneidbacke. Das der feststehenden Zangenbacke zugeordnete Kulissenteil ist in der beweglichen Zangenbacke über eine in einem zweiten Langloch geführte zweite Achse gelagert. Auch diese zweite Achse erstreckt sich mit ihrer geometrischen Drehachse bevorzugt quer zu einer Verlagerungsrichtung des Kulissenteils. Das Kulissenteil ist somit in einer möglichen Ausgestaltung mittelbar und bevorzugt nur über einen Teilweg des Schwenkweges der beweglichen Zangenbacke mit der beweglichen Zangenbacke gekoppelt.

Der Eingriff der ersten Achse in das erste Langloch wie auch der Eingriff der zweiten Achse in das zweite Langloch bietet entsprechend eine Führung, wie auch die Möglichkeit einer Relativverlagerung des jeweiligen Kulissenteils zu der das jeweilige Langloch aufweisenden Zangenbacke. Die in Längserstreckung des jeweiligen Langloches betrachtete Begrenzung des Langloches kann einen Anschlag für die Achse bieten, somit weiter eine maximale Verstellbarkeit der Schneidtiefe der Schneidbacken definieren.

Im Hinblick auf eine (manuelle) Voreinstellung der Ausgangslage des einen oder beider Kulissenteile ist die Relativanordnung der ersten und/oder zweiten Achse in dem ersten und/ oder zweiten Langloch unabhängig von einer Schwenkstellung der Klemmbacken zueinander einstellbar oder kann sich eine solche unabhängige Einstellung durch eine Einwirkung an einer anderen Stelle auf eine Verschiebemechanik des oder der Kulissenteile ergeben. Die Verschiebemechanik ist hier durch die angesprochenen Lenker- und/oder Koppelstangen gegeben. Eine unterschiedliche Ausgangslage, vor Beginn einer Abisolierung, der Achse(n) relativ zu dem zugeordneten Langloch ist vornehmbar. Durch eine solche Ausgangsstellung erfolgt im Zuge der Schließung der Schwenkbacken und Erfassen eines abzuisolierenden Kabels zwischen den Klemmbacken eine weitere automatische Schneidtiefenanpassung.

Die zusätzliche, manuelle, Einstellbarkeit ist über einen ersten und/oder zweiten Exzenter erreichbar. Der Exzenter kann, wie auch bevorzugt, um eine parallel zu den vorbeschriebenen kulissenteilseitigen Drehachsen verlaufende geometrische Achse drehbar, gegebenenfalls begrenzt drehbar angeordnet sein. Es kann sich beispielsweise um eine Exzenterscheibe handeln, die mit ihrer exzentrisch zur Drehachse umlaufenden Wandung mittelbar oder unmittelbar auf das Kulissenteil einwirkt.

Im Falle der Anordnung von zwei Exzentern können diese gleichgestaltet sein. Auch ist diesbezüglich eine unterschiedliche Gestaltung möglich, dies weiter bevorzugt unter Anpassung eines zwischen dem Exzenter und dem zugeordneten Kulissenteil geschalteten Übertragungsmittels.

Entsprechend der Erfindung sind der erste und zweite Exzenter an einem gemeinsamen Exzenterteil mit einer gemeinsamen Drehachse ausgebildet. Das Exzenterteil kann, wie auch bevorzugt, ein einstückig, gegebenenfalls auch materialeinheitlich ausgebildetes Teil sein.

Zur mittelbaren Zusammenwirkung der Exzenter mit den Kulissenteilen ist erste und/oder zweite Exzenter mittels eines ersten und eines zweiten Lenkerteils mit der ersten bzw. zweiten Achse verbunden. Der Exzenter kann in einer bevorzugten Ausgestaltung unmittelbar auf den Lenker wirken.

Die zufolge der vorgeschlagenen Lösung ermöglichte Feinjustierung der Schneidtiefe kann beispielsweise durch eine unmittelbare Verdrehung des Exzenterteils erreicht werden. Hierzu kann das Exzenterteil zur Bedienung nach außen erweitert sein, weiter gegebenenfalls eine Handhabe aufweisend.

Zufolge der ermöglichten Feinjustierung ist eine Anpassung der Schneidtiefe über die automatische Anpassung hinaus ermöglicht, wobei die manuelle Anpassung eine Schneidtiefenregulierung im Hundertstel-MillimeterBereich, bspw. bis hin zu einem Zehntelmillimeter, bietet.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: in perspektivischer Darstellung eine Abisolierzange;
- Fig. 2: in perspektivischer Einzeldarstellung ein Schneidbackenpaar;
- Fig. 3: das Schneidbackenpaar in Seitenansicht;
- Fig. 4: eine weitere perspektivische Darstellung des Schneidbackenpaares;
- Fig. 5: den Schnitt gemäß der Linie V-V in Figur 4;
- Fig. 6: eine Längsschnittdarstellung durch die Abisolierzange, eine unbetätigte Grundstellung betreffend;
- Fig. 7: eine der Figur 6 entsprechende Darstellung, jedoch eine Zwischenstellung im Zuge der Betätigung betreffend;
- Fig. 8: eine Folgedarstellung zu Figur 7 im Zuge der weiteren Betätigung der Abisolierzange;
- Fig. 9: eine Folgedarstellung zu Figur 8, die Betätigungsendstellung betreffend;
- Fig. 10: eine im Wesentlichen der Figur 7 entsprechende Längsschnittdarstellung der Abisolierzange, betreffend eine Entriegelungsstellung einer Zugstange zur Ermöglichung eines Wechsels des Schneidbackenpaares;
- Fig. 11: die Herausvergrößerung des Bereiches XI in Figur 6;
- Fig. 12: den in Figur 11 dargestellten Bereich in partiell geschnittener Perspektivdarstellung;
- Fig. 13: eine weitere perspektivische Explosionsdarstellung des in den Figuren 11 und 12 dargestellten Bereichs;
- Fig. 14: eine Klemmbacke der Abisolierzange in Stirnansicht;
- Fig. 15: die Klemmbacke in einer weiteren Ansicht;
- Fig. 16: die Klemmbacke in Seitenansicht;
- Fig. 17: die Herausvergrößerung des Bereiches XVII in Figur 16;
- Fig. 18: die Draufsicht auf die Klemmbacke gemäß Pfeil XVIII in Figur 14;
- Fig. 19: den Schnitt gemäß der Linie XIX-XIX in Figur 18;
- Fig. 20: den Schnitt gemäß der Linie XX-XX in Figur 18;
- Fig. 21: eine Schneide einer Schneidbacke in perspektivischer Einzeldarstellung;
- Fig. 22: den Schnitt gemäß der Linie XXII-XXII in Figur 21 durch die Schneide;
- Fig. 23: die Schneide in einer vergrößerten Seitenansicht;
- Fig. 24: eine vergrößerte schematische Schnittdarstellung der Anordnung beider Schneiden des Schneidbackenpaares;
- Fig. 25: eine perspektivische Darstellung des Zangenmaulbereichs bei zwischen die Klemmbacken eingelegtem, abzuisolierenden Kabel;
- Fig. 26: eine teilweise explosionsperspektivische Darstellung des Bereiches XXVI in Figur 1;
- Fig. 27: in explosionsperspektivischer Darstellung die Zangenbacken der Abisolierzange, sowie Mittel zur Einstellung einer Schnitttiefe der Schneidbacken;
- Fig. 28: eine weitere perspektivische Darstellung gemäß Figur 27;
- Fig. 29: in perspektivischer Darstellung die Verstellmittel-Anordnung zur Einstellung einer Schnitttiefe der Schneidbacken;
- Fig. 30: die Verstellmittel-Anordnung in Seitenansicht;
- Fig. 31: in einer Seitenansicht ein Exzenterteil der Verstellmittel-Anordnung mit einem ersten und einem zweiten Exzenter;
- Fig. 32: die Anordnung gemäß Figur 31 in perspektivischer Darstellung;
- Fig. 33: den Schnitt gemäß der Linie XXXIII-XXXIII in Figur 31 durch den Bereich des ersten Exzenters;
- Fig. 34: den Schnitt gemäß der Linie XXXIV-XXXIV in Figur 31 durch den Bereich des zweiten Exzenters;
- Fig. 35: eine schematische Schnittdarstellung des Bereiches XXXV in Figur 7;
- Fig. 36: eine der Figur 35 entsprechende Darstellung, jedoch nach einer manuellen Schnitttiefen-Verstellung über die Verstellmittel-Anordnung.

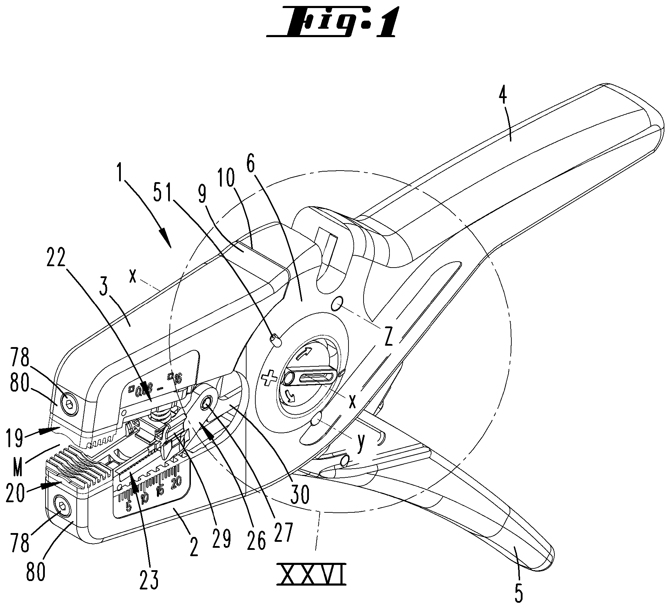

Dargestellt und beschrieben ist, zunächst mit Bezug zu Figur 1, eine Abisolierzange 1 mit zwei Zangenbacken 2, 3 und zwei Griffteilen 4, 5. Die Zangenbacken 2 und 3 begrenzen ein Zangenmaul M.

Die Zangenbacke 2, die nachstehend als feststehend bezeichnet ist, ist über einen Wangenbereich 6 unmittelbar und fest mit dem Griffteil 4 verbunden.

Im Wangenbereich 6 bietet die Abisolierzange 1 eine Lagerung für eine Drehachse 7 mit einer geometrischen Achse x an, um welche die weiter nachstehend bewegliche Zangenbacke 3 drehbar gehaltert ist.

Die Lagerung der beweglichen Zangenbacke 3 an der Drehachse 7 ergibt sich im Bereich eines in Erstreckungsrichtung der Achse x in Projektion zu dem Wangenbereich 6 der feststehenden Zangenbacke 3 sich erstreckenden Schulterbereiches 8 der beweglichen Zangenbacke 3.

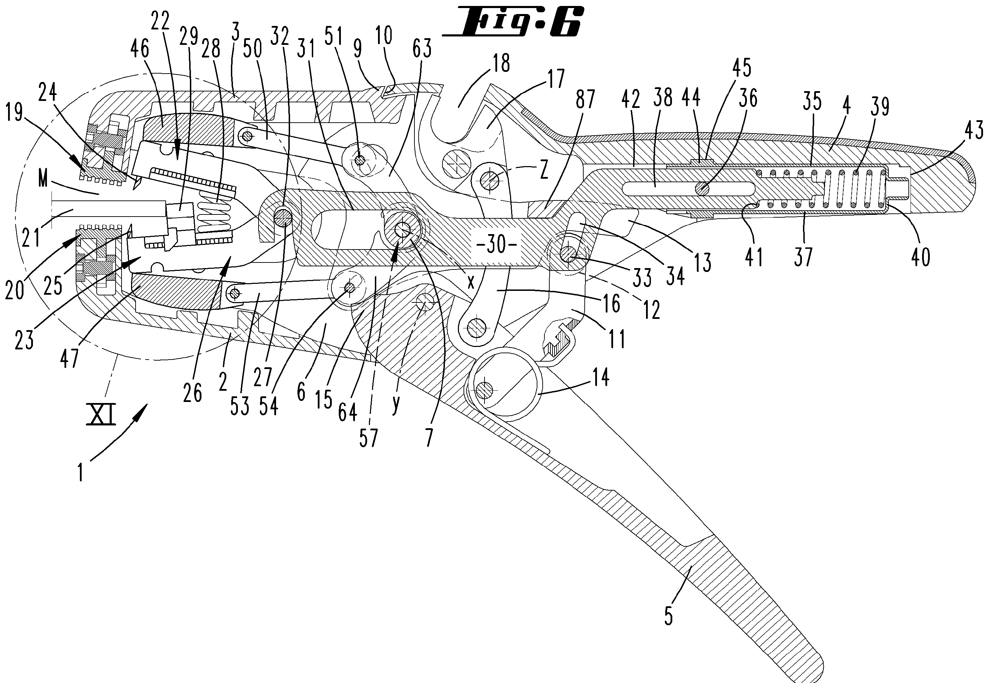

Die Zangenmaul-Offenstellung, beispielsweise gemäß der Darstellung in Figur 6, ist anschlagbegrenzt, zufolge Abstützung eines Vorsprungbereiches 9 an der beweglichen Zangenbacke 3 an einer zugeordneten Abstützfläche 10 der feststehenden Zangenbacke 2.

Das weitere Griffteil 5 ist um eine weitere, parallel zur Drehachse 7 beziehungsweise deren geometrischen Achse x ausgerichtete geometrische Achse y schwenkgelagert. Die diesbezügliche körperliche Achse ist gleichfalls in dem Wangenbereich 6 der feststehenden Zangenbacke 2 beziehungsweise des feststehenden Griffteils 4 gehaltert.

Das bewegliche Griffteil 5 ist um die Achse y in Richtung auf das feststehende Griffteil 4 schwenkbar, wobei eine Schwenkverlagerung des beweglichen Griffteils 5 in Richtung auf das feststehende Griffteil 4 eine gekoppelte Drehbewegung der beweglichen Zangenbacke 3 um die Achse x bewirkt.

Hierzu ist an dem beweglichen Griffteil 5 ein bevorzugt abgewinkelt verlaufender Steuerhebel 11 befestigt, der mit seinem freien Ende, in dem dargestellten Ausführungsbeispiel mit einer in diesem Bereich bevorzugt angeordneten Rolle 12, auf einen bspw. kulissenartig ausgebildeten Ausleger 13 des Schulterbereiches 8 der beweglichen Zangenbacke 3 einwirkt.

Der Steuerhebel 11 ist an dem beweglichen Griffteil 5 schwenkbeweglich gehaltert. Die diesbezügliche Schwenkachse verläuft bevorzugt parallel zur geometrischen Drehachse x.

Zwischen dem Steuerhebel 11 und dem beweglichen Griffteil 5 wirkt eine Rückstellfeder 14 bevorzugt in Form einer Schenkelfeder. Diese belastet das bewegliche Griffteil 5 in Richtung auf die in Figur 6 dargestellte Grundstellung.

In dieser Grundstellung wirkt ein sich mit Bezug zu der geometrischen Achse y des beweglichen Griffteils 5 abgewandt zu dem Griffbereich erstreckender Vorsprungbereich 15 derart auf den Schulterbereich 8 der beweglichen Zangenbacke 3 ein, dass diese in ihre anschlagbegrenzte Grundstellung gedrängt und gehalten ist.

Darüber hinaus wirkt das bewegliche Griffteil 5 über einen Lenker 16 auf eine in den Wangenbereich 6 der feststehenden Zangenbacke 2 schwenkgelagerte Schneide 17 ein. Die Lagerung der Schneide 17 erfolgt im Wangenbereich 6, wobei die diesbezügliche geometrische Achse z ebenfalls parallel verläuft zu der geometrischen Drehachse x der beweglichen Zangenbacke 3.

Die Schneide 17 liegt in einem freigeschnittenen Bereich 18 der feststehenden Zangenbacke 3 beziehungsweise des Wangenbereiches 6 frei und dient bevorzugt zum Ablängen eines Kabels, beispielsweise eines in einem weiteren Schritt abzuisolierenden Kabels.

Durch die Schwenkbewegung der Schneide 17 im Zuge der Schwenkverlagerung des beweglichen Griffteils 5 in Richtung auf das feststehende Griffteil 4 wird ein gegebenenfalls in dem Bereich 18 einliegendes Kabel unter Abstützung des Kabels an den Flanken des Wangenbereiches 6, welche den Bereich 18 begrenzen, durch die verschwenkende Schneide 17 durchtrennt.

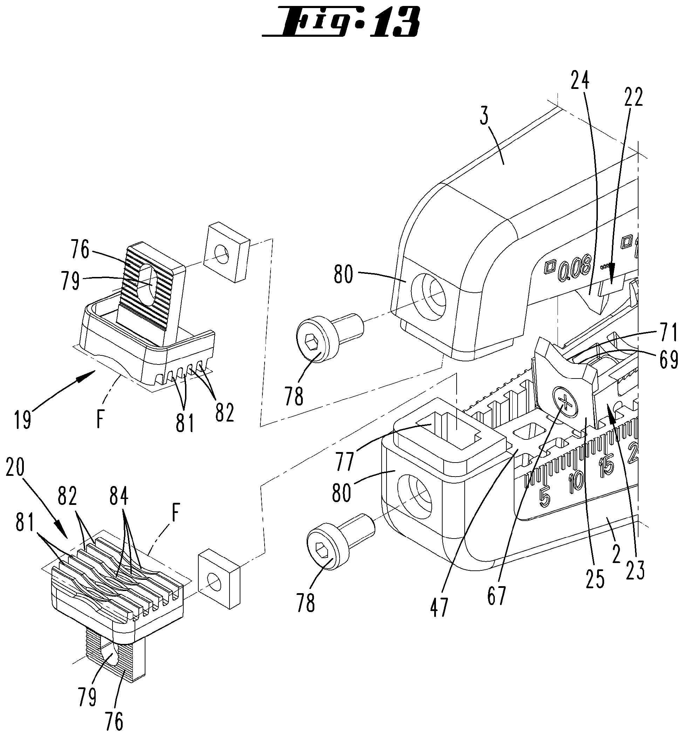

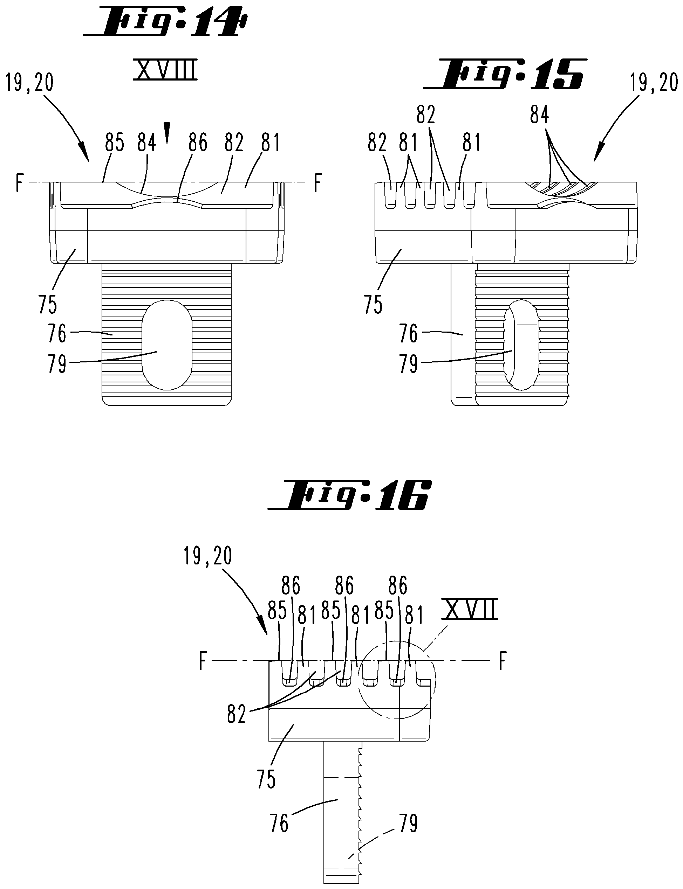

Die beiden Zangenbacken 2 und 3 weisen jeweils eine äußere Klemmbacke 19, 20 auf, zur klemmenden Erfassung eines zur Abisolierung eines freien Endes in das Zangenmaul M eingelegten Kabels 21, vergleiche auch Figuren 13 bis 16.

Darüber hinaus sind zwei, mit Bezug auf die Anordnung der Klemmbacken 19 und 20 relativ zu der geometrischen Drehachse x, innere Schneidbacken 22, 23 vorgesehen, jeweils in den Klemmbacken 19 und 20 zugewandten Endbereich festgelegten Schneiden 24, 25. Die Schneiden 24 und 25 sind aufeinander zuweisend angeordnet.

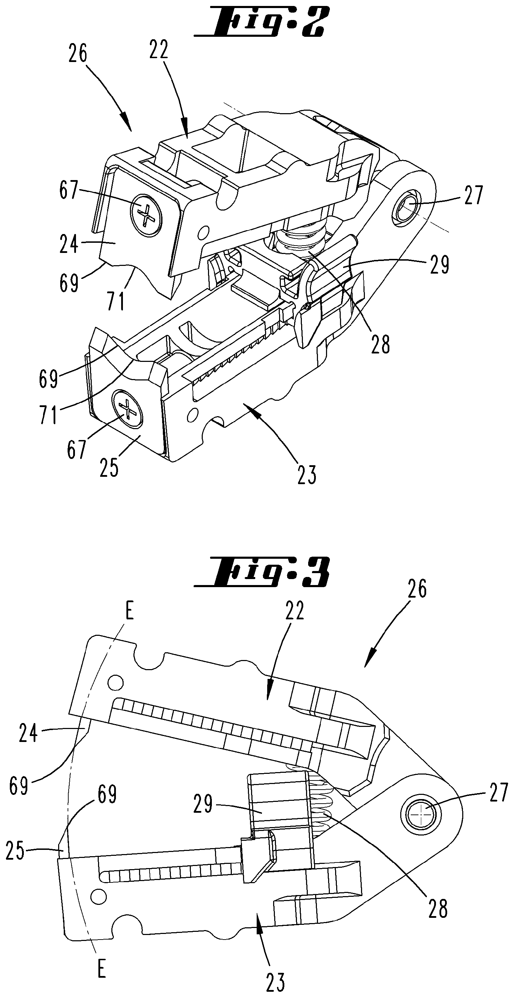

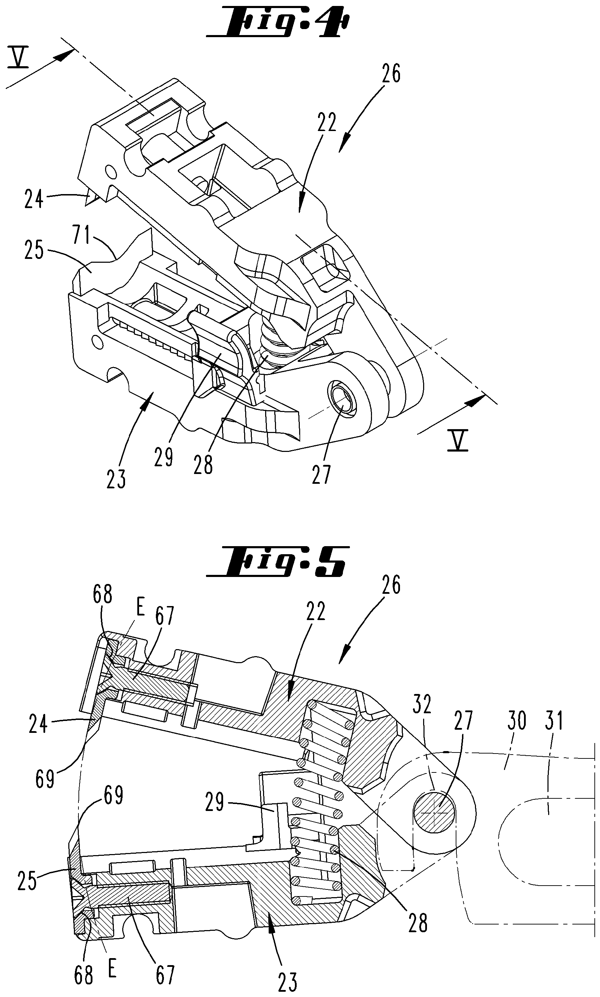

Die Schneidbacken 22 und 23, wozu in weiterer Einzelheit auch auf die Figuren 2 bis 5 verwiesen wird, sind zu einem Schneidbacken-Paar 26 zusammengefasst und im Bereich der den Schneiden 24 und 25 abgewandten Enden über eine Schwenkachse 27 miteinander verbunden, welche Schwenkachse 27 eine Relativverschwenkbarkeit der Schneidbacken 22 und 23 zueinander erlaubt.

Die geometrische Achse der Schwenkachse 27 erstreckt sich in betriebsbereiter Anordnung des Schneidbacken-Paares 26 bevorzugt in Parallelausrichtung zu der Drehachse x der beweglichen Zangenbacke 3.

Zwischen den Schneidbacken 22 und 23 ist eine Feder 28, in dem dargestellten Ausführungsbeispiel in Form einer Zylinder-Druckfeder, angeordnet, welche Feder 28 die Schneidbacken 22 und 23 in eine zueinander distanzierte Offenstellung belastet.

In dem dargestellten Ausführungsbeispiel ist an der unteren Schneidbacke 23, d.h. an der der feststehenden Zangenbacke 2 zugeordneten Schneidbacke 22 ein in Erstreckungsrichtung der Schneidbacke 22 rastfestlegbarer Anschlagschlitten 29 vorgesehen, zum Anbieten eines Anschlages für das freie, in das Zangenmaul M eingeführte Ende des Kabels 21, um hierüber die Länge des abzuisolierenden Bereiches zu definieren.

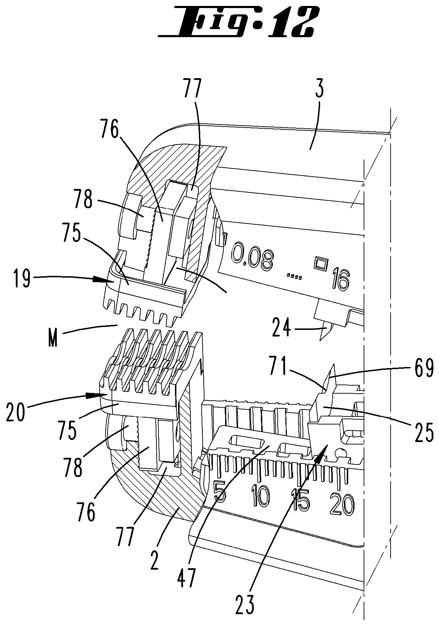

Die Schneidbacken 22 und 23 sind in der jeweils zugeordneten Zangenbacke 2, 3 seitlich geführt, vergleiche auch beispielsweise Figuren 12 und 13, zur Ermöglichung einer ordnungsgemäßen Schiebeverlagerung der Schneidbacken 22 und 23 in Richtung ihrer Längserstreckung, d.h. ausgehend von einer den Klemmbacken 19 und 20 zugeordneten Ausgangsstellung in Richtung einer zu den Klemmbacken 19 und 20 beabstandeten und in Richtung auf die Drehachse x verlagerten Endstellung und aus dieser Endstellung wieder zurück in die Ausgangsstellung.

Für diese Verlagerung der Schneidbacken 22, 23, bevorzugt des Schneidbacken-Paares 26 insgesamt, ist eine Zugstange 30 vorgesehen. Die Schneidbacken 22, 23 können im Zuge eines Zusammendrückens der Griffteile 4, 5 gegen die Kraft einer auf die Zugstange 30 wirkenden Feder 39 aus einer Ausgangsstellung in eine Endstellung verlagert werden. Die Zugstange 30 ist hierzu weiter bevorzugt von einer in einem bspw. Langloch 34 bewegbaren Zugachse 33 durchsetzt. Die Zugstange 30 weist darüber hinaus bevorzugt an ihrem griffseitigen Ende ein an der Zugstange 30 befestigtes Verschiebeteil auf. Das Verschiebeteil kann gegen die Kraft der Feder 39 relativ zu der Zugstange 30 verschiebbar sein, zur Befreiung der Zugstange 30 auf einer griffseitigen Lagerung.

Das Verschiebeteil kann insbesondere als eine Hülse 35 ausgebildet sein.

Wenn die Zugstange 30 auf der griffseitigen Lagerung befreit ist, kann die Zugstange 30 um die Zugachse 33 verschwenkbar sein. Durch eine entsprechende Verschwenkung werden die Schneidbacken 22, 23 von der Zugstange 30 frei gegeben.

Die Zugstange 30 ist auch unter Durchsetzung einer zugstangenseitigen, langlochartigen Ausnehmung 31 durch die körperliche Drehachse 7 geführt.

Zugeordnet der Schwenkachse 27 des Schneidbacken-Paares 26 weist die Zugstange 30 eine im Wesentlichen in Richtung auf die feststehende Zangenbacke 2, darüber hinaus im Wesentlichen in Schließ- beziehungsweise Öffnungsrichtung der Schneidbacken 22 und 23 gerichtete Einfahröffnung 32 auf. Diese ist geschaffen durch eine insgesamt hakenartige Ausgestaltung des diesbezüglichen Endbereiches der Zugstange 30.

In dieser Einfahröffnung 32 liegt in üblicher Nutzungsstellung der Abisolierzange 1 die Schwenkachse 27 des Schneidbacken-Paares 26 ein, so dass eine zufolge der langlochartigen Ausgestaltung der Ausnehmung 31 ermöglichte Schiebeverlagerung der Zugstange 30 zu einer entsprechenden Schiebeverlagerung des Schneidbacken-Paares 26 führt.

Diese Schiebeverlagerung der Zugstange 30 ist über eine Kopplung mit den am beweglichen Griffteil 5 gehalterten Steuerhebel 11 ermöglicht, welcher Steuerhebel 11 mit einer parallel zur Drehachse 7 ausgerichteten Zugachse 33, die in dem dargestellten Ausführungsbeispiel zugleich die Achse für die Rolle 12 bilden kann, in ein zugstangenseitiges Langloch 34 eingreift. Eine Mittellängslinie des Langloches 34 schließt zu einer Verlagerungsrichtung r der Zugstange 30 einen spitzen Winkel α von etwa 60 bis 85°, weiter beispielsweise etwa 75° ein.

Ein gegenüber dem insbesondere im Bereich der Drehachse 7 und der Zugachse 33 geführten Bereich abgekröpfter Abschnitt der Zugstange 30 verläuft in üblicher Nutzungsstellung der Abisolierzange 1 gegebenenfalls innerhalb des feststehenden Griffteiles 4, jedenfalls in Zuordnung zu diesem.

Im Bereich des griffseitigen Endes ist die Zugstange 30 von der genannten Hülse 35 umfasst. Diese ist bevorzugt unverlierbar an der Zugstange 30 gehaltert, dies unter Ermöglichung einer Schiebeverlagerbarkeit der Hülse 35 relativ zu der Zugstange 30. Dies ist ermöglicht zufolge eines zapfenartigen Halterungsteils 36, das den Hülsenquerschnitt durchsetzt, unter jeweils endseitiger Festlegung des zapfenförmigen Halterungsteils 36 im Bereich der Hülsenwandung 37. Das zapfenförmige Halterungsteil 36 durchsetzt hierbei die in der Hülse 35 endbereichseitig aufgenommene Zugstange 30 im Bereich eines weiteren Langlochs 38.

Innerhalb der Hülse 35 ist die Feder 39 in Form einer Zylinder-Druckfeder angeordnet, die sich einerends am Boden 40 der Hülse 35 abstützt und anderenends an einer dem Boden 40 zugewandten Schulter 41 der Zugstange 30. Entsprechend ist eine Relativverlagerung von Zugstange 30 und Hülse 35 in Richtung der Hülsenlängsachse entgegen der Kraft der Feder 39 ermöglicht.

Die Hülse 35 ist zusammen mit dem zugeordneten Endbereich der Zugstange 30 in dem dargestellten Ausführungsbeispiel in einer griffinnenseitigen Höhlung 42 aufgenommen, wobei sich die Hülse 35 im betriebsbereiten Zustand der Abisolierzange 1 über eine über den Boden 40 hinausragende zapfenförmige Erweiterung an einem Höhlungsboden 43 abstützen kann.

Darüber hinaus weist die Hülse 35 einen Rastvorsprung 44 auf, zum Eingriff in eine an dem Griffteil 4, insbesondere im Bereich der Höhlung 42 ausgebildete Rastausnehmung 45.

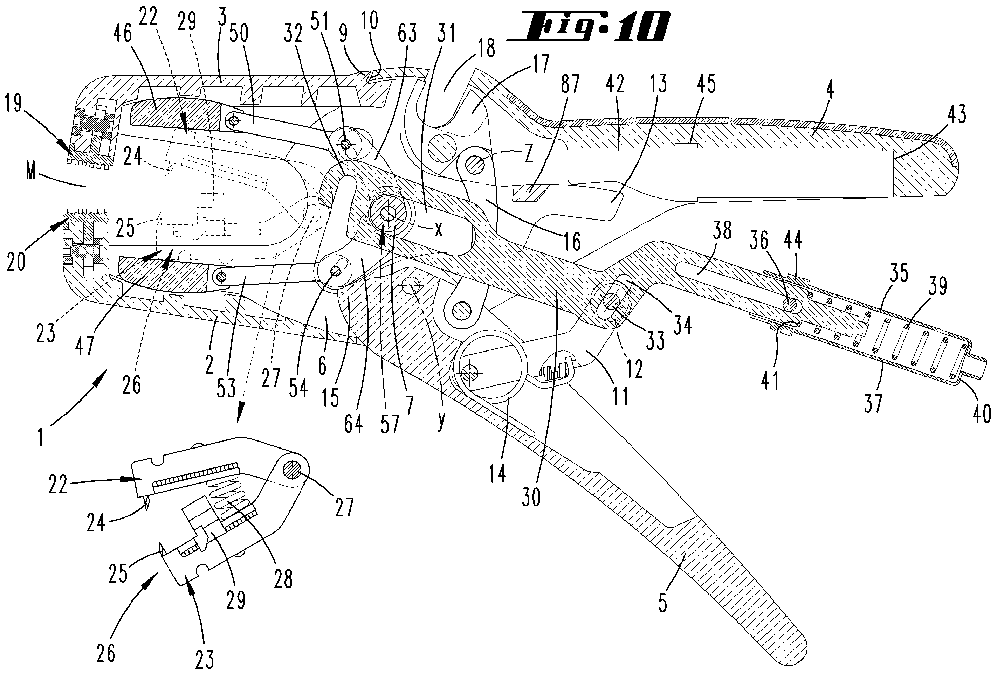

Die Zugstange 30 kann zufolge der vorbeschriebenen Anordnung und Ausgestaltung der abgefederten Hülse 35 aus der griffteilseitigen Lagerung befreit werden (vergleiche Figur 10). Hiernach kann, wie auch schon weiter oben ausgeführt, die Zugstange 30 um die Drehachse 7 geschwenkt werden, was zudem auch durch die in dem Langloch 34 der Zugstange 30 geführte Zugachse 33 ermöglicht ist. Zufolge dieser Schwenkverlagerung der Zugstange 30 in Richtung auf das bewegliche Griffteil 5 wird ein Aufschwenken des die Einfahröffnung 32 aufweisenden freien Endes der Zugstange 30 bewirkt, zur Freigabe der Schwenkachse 27 des Schneidbacken-Paares 26. Darüber hinaus kann gegebenenfalls überlagert zu der Aufschwenkbewegung der Zugstange 30 eine Linearbewegung, geführt durch die in der langlochartigen Ausnehmung 31 eingreifenden Drehachse 7, gegeben sein. Hierbei wird der über die Zugachse 33 mitgeschleppte Steuerhebel 11 entgegen der Kraft der Rückstellfeder 14 schwenkverlagert.

In der aufgeschwenkten und gegebenenfalls schiebeverlagerten Stellung der Zugstange 30 gemäß der Darstellung in Figur 10 kann in handhabungstechnisch günstiger Weise eine Entnahme des Schneidbacken-Paares 26 erfolgen, bevorzugt unter Durchführen einer Schwenkbewegung der Schneidbacken 22 und 23 in Richtung auf eine Schließstellung entgegen der die Schneidbacken 22 und 23 belastenden Feder 28.

Auch ist nach einem Wiedereinsetzen eines Schneidbacken-Paares 26 die ordnungsgemäße Betriebsstellung der Abisolierzange 1 in handhabungstechnisch günstiger und werkzeugloser Weise einnehmbar.

Die Schneidbacken 22 und 23 sind in Richtung auf eine Schließstellung entgegen einer die Schneidbacken 22 und 23 in eine beispielsweise in Figur 6 dargestellte Offenstellung belastende Feder 28 bei einem Zusammenführen der Griffschenkel 4 und 5 aufeinander zu bewegbar.

Die Schneidbacken 22 und 23 sind weiter als Paar zusammengefasst herausnehmbar, zum Auswechseln. In weiterer Einzelheit sind die Schneidbacken 23 und 23 über eine Schwenkachse 27, die auch bevorzugt als Achsstift ausgebildet ist, miteinander schwenkbar verbunden.

Jede Schneidbacke 22, 23 stützt sich in der zugeordneten Zangenbacke 2, 3 über ein Kulissenteil 46, 47 ab, welches Kulissenteil 46, 47 sich wiederum an einer klemmbackenfesten Kulisse 48, 49 abstützt.

Diese mittelbare Abstützung der Schneidbacken 22, 23 an der jeweiligen Zangenbacke 2, 3 ist aus der eingangs erwähnten EP 1 557 920 B1 bekannt. Es wird bezüglich der Wirkungsweise auch auf den Inhalt dieser Patentschrift verwiesen.

Das gleitkeilartige Kulissenteil 46 beziehungsweise 47 ist geeignet zur Verlagerung entlang der backenseitig gleitkeilflächenartig ausgebildeten Kulisse 48 beziehungsweise 49. Die Radien der miteinander wirkenden Flächen von Kulissenteil 46, 47 und Kulisse 48, 49 sind einander angepasst. Insgesamt ist eine Schiebeverlagerbarkeit der Kulissenteile 46 und 47 im Wesentlichen in Verschieberichtung r der Zugstange 30 und des Schneidbacken-Paars 26 gegeben.

Das in der beweglichen Zangenbacke 3 geführte Kulissenteil 46 ist bevorzugt über eine Koppelstange 50 mit dem Wangenbereich 6 der feststehenden Zangenbacke 2 beziehungsweise des feststehenden Griffteils 4 verbunden, dies über eine endseitig der Koppelstange 50 vorgesehene erste Achse 51, die in dem Wangenbereich 6 in einem ersten Langloch 52 geführt ist.

Auch das in der feststehenden Zangenbacke 2 geführte Kulissenteil 47 kann eine Koppelstange 53 aufweisen, die endseitig eine zweite Achse 54 tragen kann, zum Eingriff in ein im Schulterbereich 8 der beweglichen Zangenbacke 3 vorgesehenes zweites Langloch 55.

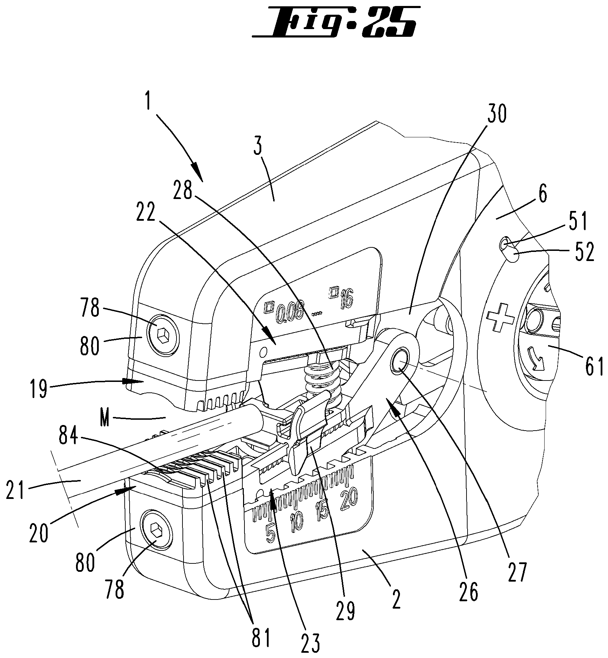

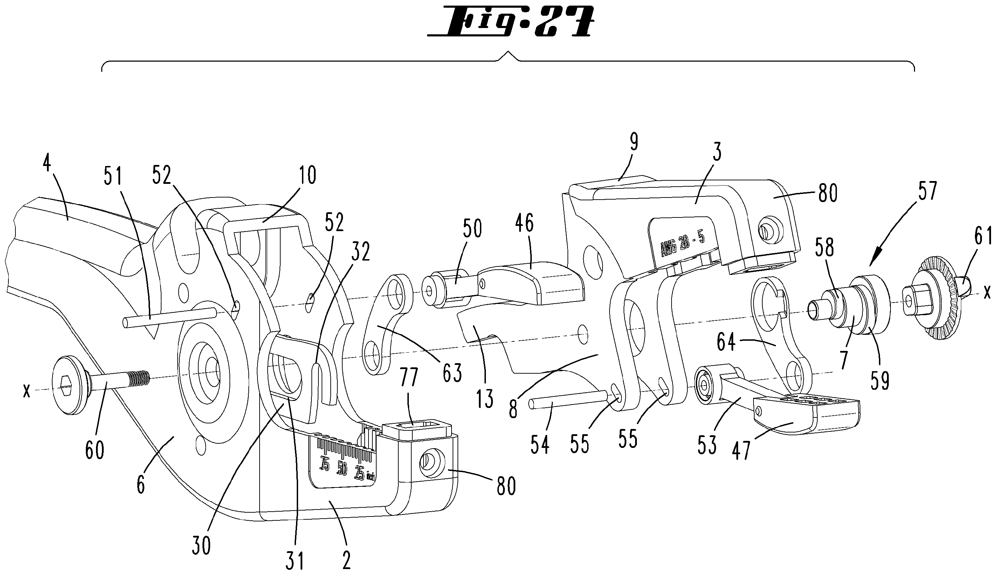

Mit Bezug auf eine Grundstellung beispielsweise gemäß der Darstellung in Figur 6 sind die Langlöcher 52 (siehe auch Figur 25) und 55 (siehe auch Figur 27) mit Bezug auf eine Projektion derselben in Richtung der geometrischen Drehachse x in eine senkrecht zur Drehachse x ausgerichteten Ebene so ausgerichtet, dass diese zu der Verschieberichtung r im Wesentlichen jeweils einen spitzen Winkel von etwa 45° einschließen, wobei beide Langlöcher 52 und 55 im Wesentlichen in Richtung auf die Drehachse x geneigt verlaufen.

Zufolge der vorbeschriebenen Anordnung der Kulissenteile 46 und 47 in Zusammenwirkung mit den backenseitigen Kulissen 48 und 49, wie auch weiter zufolge der Anbindung der Kulissenteile 46 und 47 über die Koppelstangen 50 und 53 an einem Bereich der im Wesentlichen gegenüberliegenden Zangenbacke ist bei dem Ausführungsbeispiel eine selbsttätige (automatische) Schneidtiefenanpassung in Abhängigkeit von dem Kabel-Außendurchmesser gegeben.

Es ergeben sich in Abhängigkeit von dem Durchmesser beziehungsweise der Dicke des zwischen den Klemmbacken 19 und 20 zu erfassenden Kabels 21 bei entsprechendem Zusammendrücken der Griffteile 4 und 5 unterschiedliche Schneidtiefen der Schneiden 24 und 25 der Schneidbacken 22 und 23, da in Abhängigkeit mit der erfassten Kabeldicke und der damit einhergehenden Beabstandung der Klemmbacken 19 und 20 und hierüber der Zangenbacken 2 und 3 eine Schiebeverlagerung der Kulissenteile 46 und 47 entlang der Kulissen 48, 49 einhergeht, demzufolge sich der Abstützpunkt für die Schneidbacken 22 und 23 an den Kulissenteilen 46 und 47 ändert. Die Kulissenteile 46 und 47 werden in Abhängigkeit von der Kabeldicke in gleichem Maße in beziehungsweise entgegen der Verschieberichtung r über die Koppelstangen 50 und 53 verlagert.

Die Einstellung der Schnitttiefe erfolgt dadurch, dass bei einem Zusammendrücken der Griffteile 4 und 5 und hierüber der Zangenbacken 2 und 3 und der damit verbundenen Auslenkung der beweglichen Zangenbacke 3 um die Drehachse 7 das untere Kulissenteil 47 in der feststehenden Zangenbacke 2 über die mit der beweglichen Zangenbacke 3 verbundene Koppelstange 53 leicht von der Maulspitze weggezogen wird. Dabei wird das Kulissenteil 47 um einen Betrag verschoben. Durch diese Verschiebung wird die zugeordnete Schneidbacke 23 um einen Zustellbetrag geschlossen und zugleich die Winkellage des Kulissenteiles 47 verändert.

Synchron hierzu erfolgt über das über die Koppelstange 50 mit der feststehenden Zangenbacke 2 verbundene Kulissenteil 46 eine Auslenkung der beweglichen Zangenbacke 3, so dass eine Relativbewegung des Kulissenteils 46 gegenüber der zugeordneten Kulisse 48 in gleicher Richtung wie bei dem Kulissenteil 47 erfolgt. So erfolgen auch hier eine Zustellbewegung der zugeordneten Schneidbacke 22 senkrecht zur Längsverschiebung und die Lagekorrektur des Kulissenteils 46.

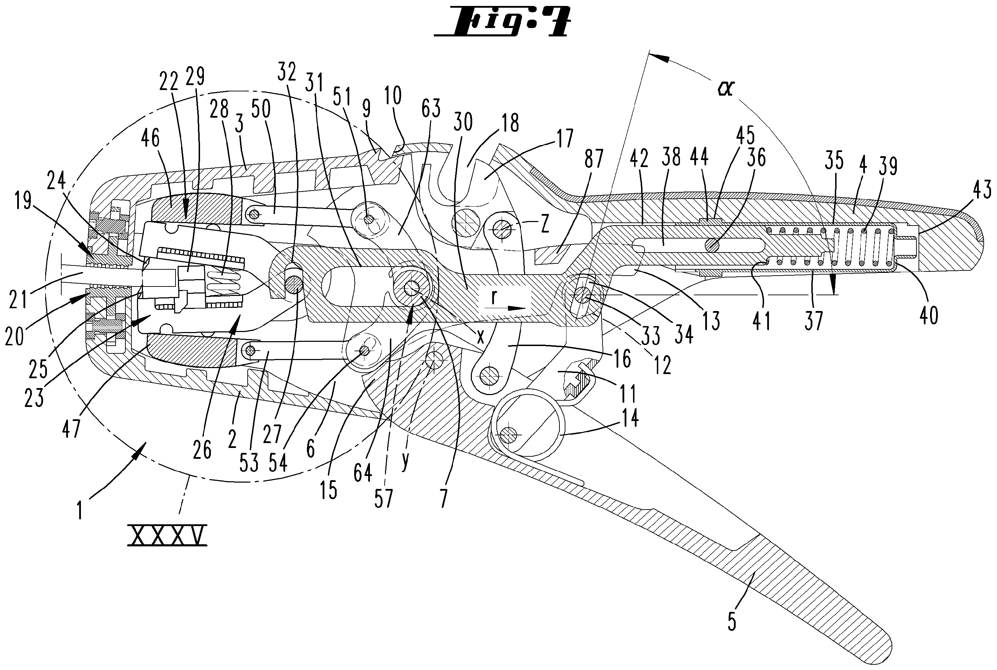

Im Zuge des Zusammendrückens der Griffteile 4 und 5 wird zunächst ein Schließen des Zangenmauls M zufolge entsprechender Schwenkverlagerung der beweglichen Zangenbacke 3 unter Überlagerung einer Schließung des Schneidbacken-Paares 26 durchgeführt (vergleiche Figur 7). Die Schneiden 17 der Schneidbacken 22 und 23 schneiden in den Isolationsmantel des Kabels 21 ein, dies mit einer Einschnitttiefe, die gemäß der vorbeschriebenen Ausgestaltung in Abhängigkeit von der Kabeldicke sich automatisch einstellt.

Die Schwenkverlagerung der beweglichen Zangenbacke 3 ist erreicht zufolge einer entsprechenden Beaufschlagung der an dem Steuerhebel 11 angeordneten Rolle 12 an einer zugewandten, in der Grundstellung der Abisolierzange 1 in etwa in Verschieberichtung r ausgerichteten Steuerfläche des Auslegers 13.

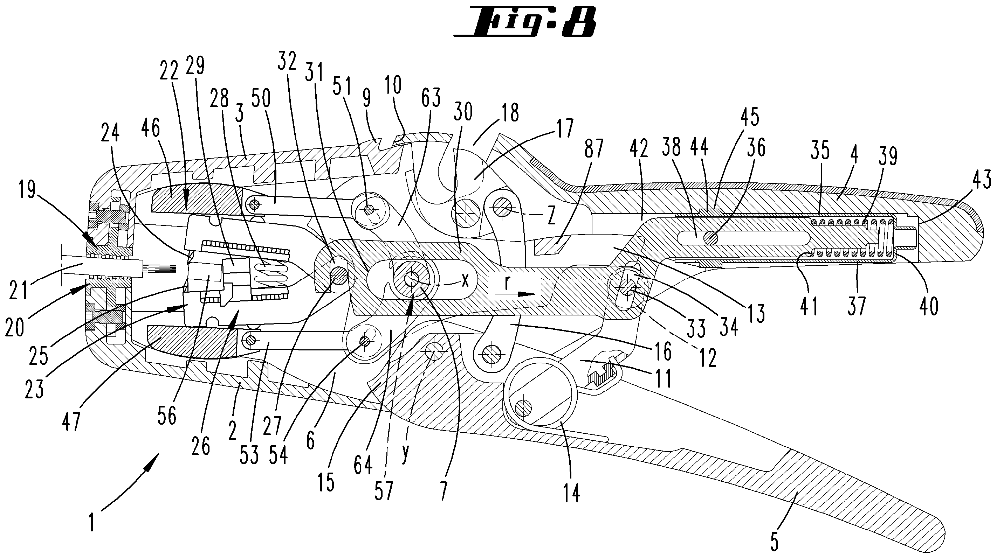

Bei weiterer Schwenkverlagerung des beweglichen Griffteiles 5 in Richtung auf den feststehenden Griffteil 4 gemäß der Darstellung in Figur 8 gleitet die Rolle 12 des Auslegers 13 entlang der zugewandten und vorbeschriebenen Stirnfläche des Auslegers 13 unter Überwindung der Rückstellkraft der in der Hülse 35 auf die Zugstange 30 einwirkenden Feder 39. Die Zugstange 30 wird linear in Verschieberichtung r gezogen, unter Mitschleppung des Schneidbacken-Paars 26. Hierdurch erfolgt das Abstreifen des durch Einschneiden mittels der Schneiden 17 separierten Isolationsabschnittes 56 vom Leiter.

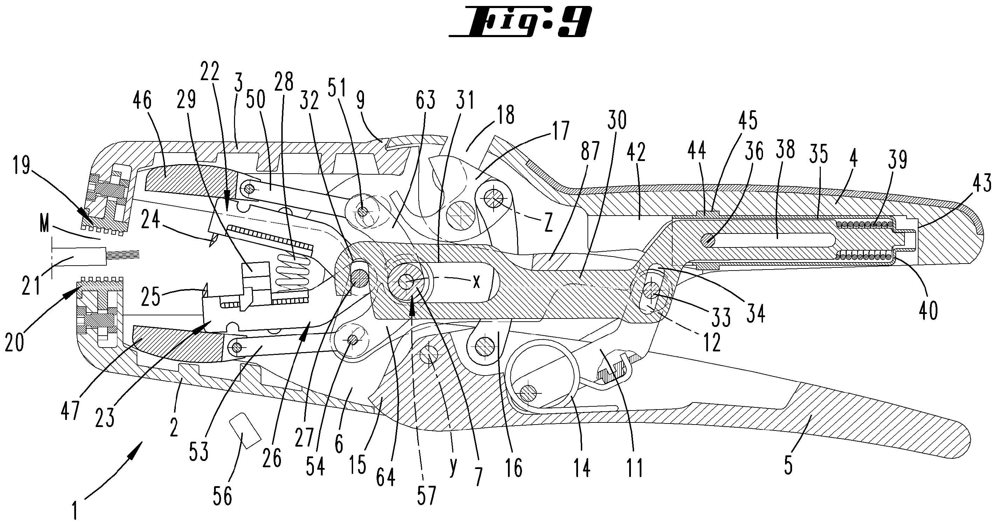

Gemäß der Darstellung in Figur 9 verlässt die auslegerseitige Rolle 12 bei einem weiteren Zusammendrücken der Griffteile 4 und 5 die abstützende Stellung zu dem Ausleger 13 der beweglichen Zangenbacke 3, welche zurück in Richtung auf ihre Offen-Grundstellung verschwenkt, unter gleichzeitiger Öffnung des Zangenmauls M, wie auch des Schneidbacken-Paares 26. Dies unter anderem bedingt durch die Rückstellkraft der zwischen den Schneidbacken 22 und 23 vorgesehenen Feder 28.

Das endseitig abisolierte Kabel 31 liegt zur Entnahme aus der Abisolierzange 1 frei. Der abgetrennte und abgezogene Isolationsabschnitt 56 liegt zur Entnahme frei oder fällt gegebenenfalls selbsttätig aus dem Zangenmaul M.

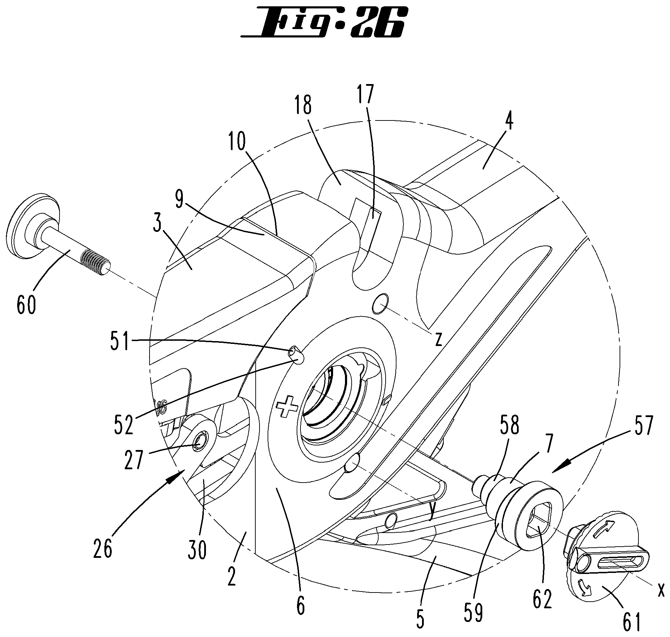

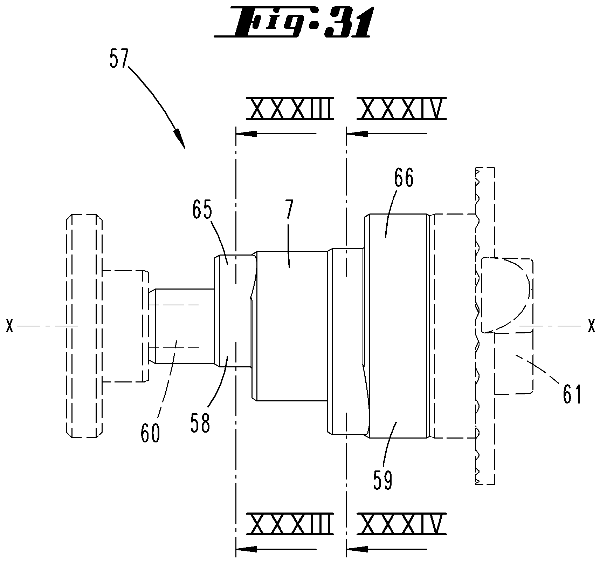

Zur Ermöglichung einer Justierung der automatischen Schneidtiefenanpassung der Schneiden 24 und 25 der Schneidbacken 22 und 23 kann ein zentrales Verstellmittel vorgesehen sein. Dieses kann, wie beispielhaft in Figur 26 dargestellt, ein einstückig ausgebildetes Exzenterteil 57 sein mit zwei in Achsrichtung des Exzenterteils 57 zueinander beabstandeten Exzentern 58 und 59. Weiter wird hierzu auf die Figuren 31 bis 34 verwiesen.

Weiter kann das Exzenterteil 57, wie auch dargestellt, die Drehachse 7 bilden, insbesondere durch einen zwischen den Exzentern 58 und 59 gebildeten, im Querschnitt kreisrunden und konzentrischen Exzenterteilbereich.

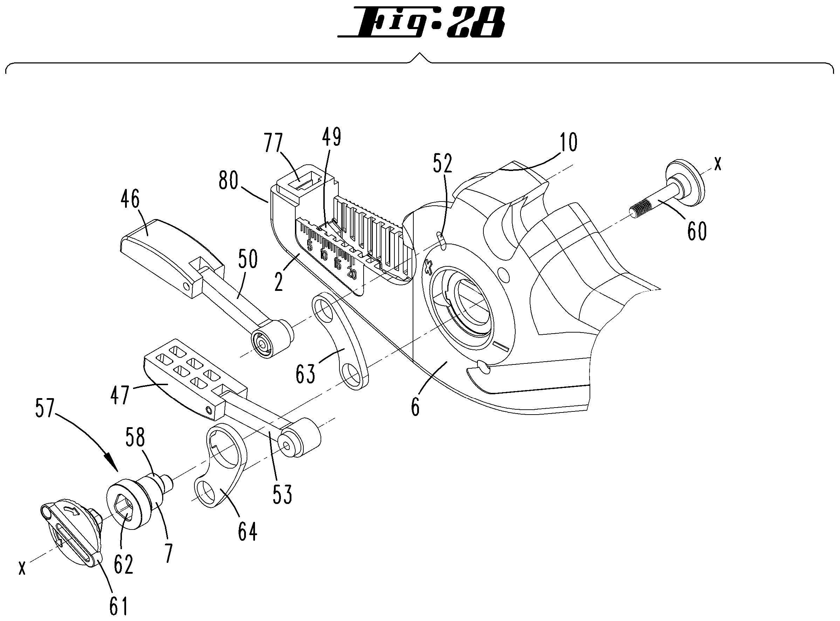

Das Exzenterteil 57, vergleiche auch Figur 28, kann hohlwellenartig gebildet sein, zum Durchsatz einer zentralen, massiven Welle. Diese kann weiter gebildet sein durch einen Schraubbolzen 60, über welchen das Exzenterteil 57 an dem Wangenbereich 6 der feststehenden Zangenbacke 2 drehhalterbar ist. Der Schraubbolzen 60 stützt sich hierbei endseitig mit einem Kragen wangenseitig ab. Diesem Kragen in Achsrichtung gegenüberliegend erfolgt eine Verschraubung mit einer von außen zugänglichen, tellerförmigen Handhabe 61, welche mit einem, wie dargestellten, Vierkant-Fortsatz drehfest in eine entsprechend ausgebildete koaxiale Ausnehmung 62 des Exzenterteils 57 eingreift. Eine Drehverlagerung der Handhabe 61 um die geometrische Drehachse x führt entsprechend zu einer Drehverlagerung des Exzenterteils 57 insgesamt. Es kann eine Rastdrehverlagerung gegeben sein.

Der bezüglich des die Drehachse 7 ausformenden Mittelbereichs des Exzenterteils 57 der Handhabe 61 zugewandte zweite Exzenter 59 kann insgesamt, d.h. auch bezüglich der nockenartigen Erweiterung, durchmessergrößer ausgebildet sein als der die Drehachse 7 bildende Abschnitt, während der weitere, entfernt zu der Handhabe 61 ausgebildete erste Exzenter 58 gegenüber dem mittleren, die Drehachse 7 bildenden Bereich durchmesserkleiner ausgebildet sein kann.

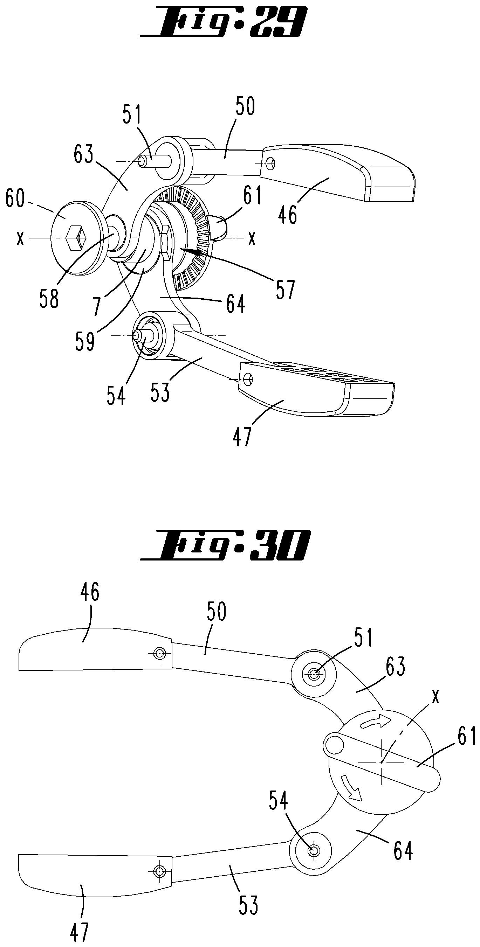

Die Exzenter 58 und 59 wirken über erste und zweite Lenker 63, 64 auf die erste beziehungsweise zweite Achse 51, 54 der Koppelstangen 50, 53 (siehe Figuren 30, 35 und 36).

Die Justierung der auch durch diese Ausgestaltung weiterhin gegebene automatische Schneidtiefeneinstellung erfolgt zufolge Verdrehen der Handhabe 61, was entsprechend über die formschlüssige Verbindung zu einer Drehverlagerung der Exzenter 58 und 59 führt, weiter entsprechend zu einer Verlagerung der exzentrisch gegenüber der geometrischen Drehachse x im Querschnitt vorgewölbten Steuerbereiche 65, 66 um den jeweiligen Winkelbetrag.

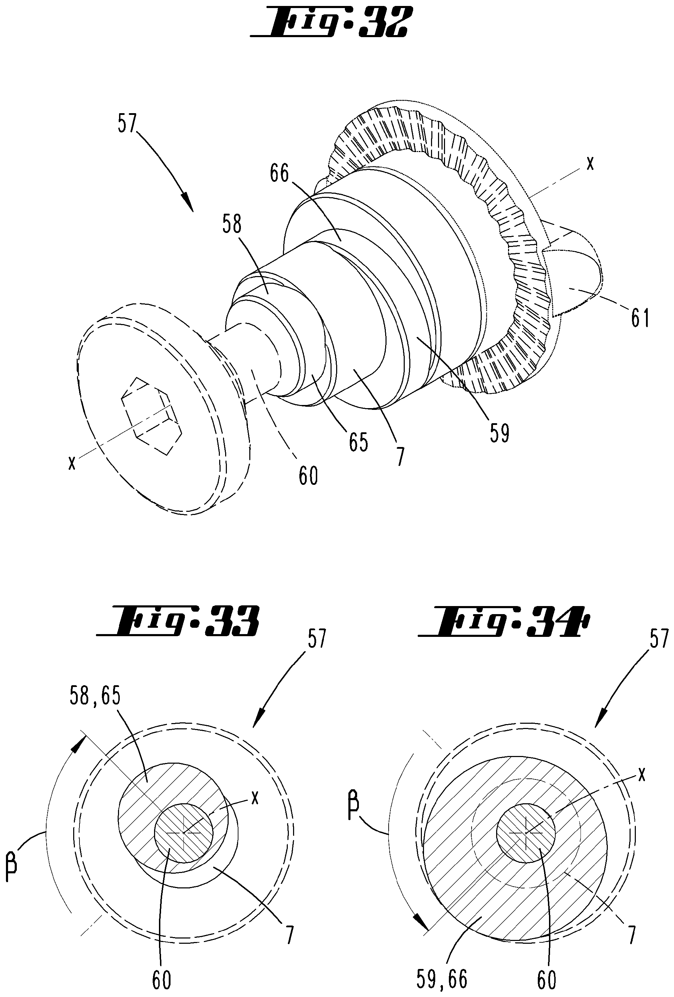

Wie aus den Schnittdarstellungen in den Figuren 33 und 34 zu erkennen, können gemäß dem dargestellten Ausführungsbeispiel die Steuerbereiche 65 und 66 der Exzenter 58 und 59 mit Bezug auf die geometrische Drehachse x um einen Winkel β von etwa 90° zueinander versetzt angeordnet sein.

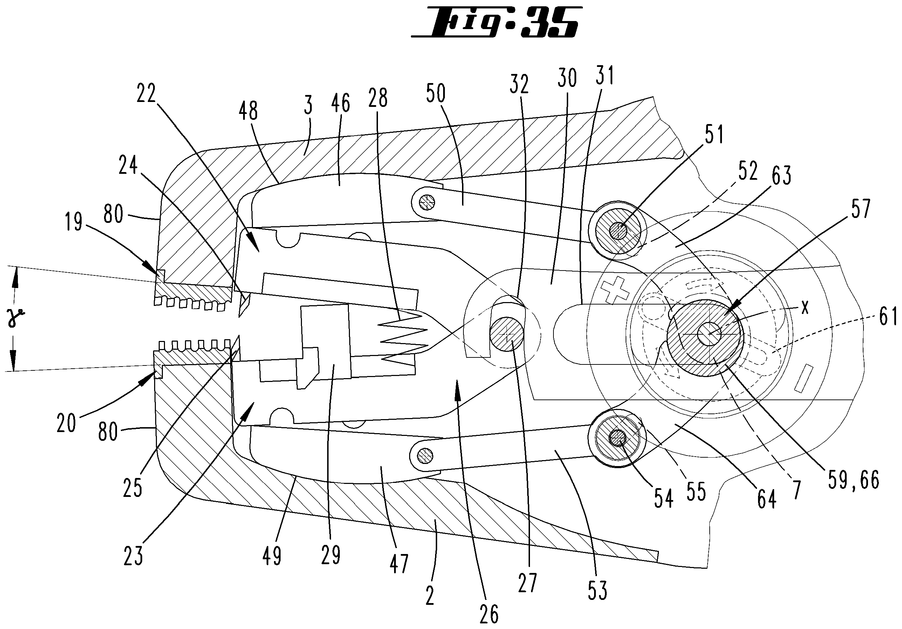

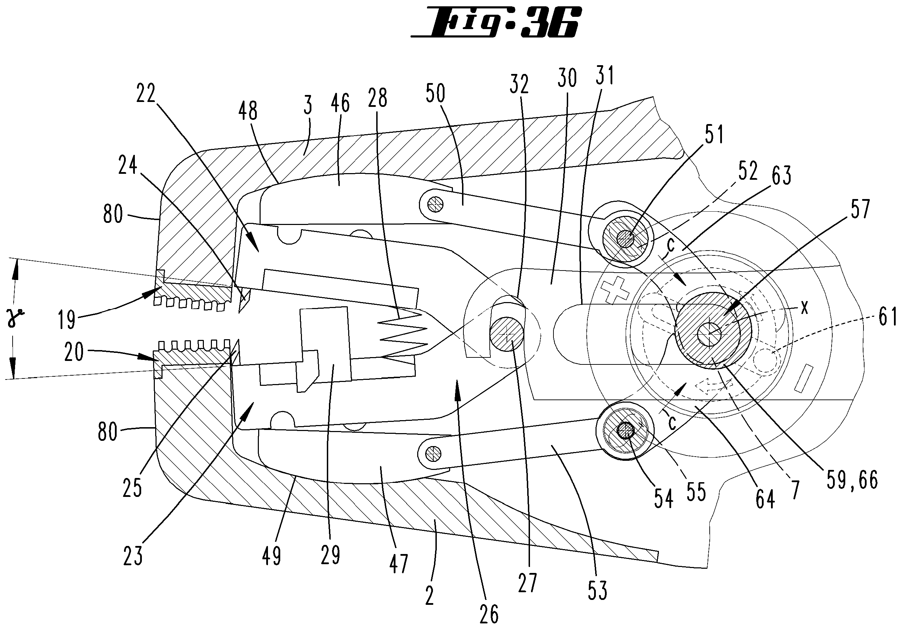

Zufolge Verdrehen der Handhabe 61 und damit einhergehendem Verdrehen der Exzenter 58 und 59 um die geometrische Drehachse x ist eine gleichmäßige und gleichgerichtete Verlagerung der ersten und zweiten Achse 51, 54 beider Koppelstangen 50 und 53 in den zugeordneten ersten und zweiten Langlöchern 52, 55 erreichbar (siehe Pfeile c). In Figur 36 ist eine gegenüber der Stellung in Figur 35 um 180° verdrehte Handhaben-Stellung gezeigt. Entsprechend sind die Steuerbereiche 65 und 66 der Exzenter 58 und 59 in eine mit Bezug zu der geometrischen Drehachse x gegenüberliegende Stellung verdreht, unter entsprechender Schleppmitnahme der zugeordneten Lenker 63 und 64. Letztere umfassen in einer möglichen Ausgestaltung die umlaufende Stirnfläche des jeweiligen Exzenters.

Die Achsen 51 und 54 sind gemäß dem Beispiel um etwa das halbe Erstreckungsmaß des jeweils zugeordneten Langlochs 52, 55 in dem Langloch 52, 55 verlagert, unter entsprechendem Mitschleppen der an den Achsen 51 und 54 angebundenen Koppelstangen 50 und 53 sowie der abschließend vorgesehenen Kulissenteile 46 und 47.

Im Falle der Anordnung einer so ausgebildeten Verstellmittel-Anordnung kann über die Handhabe 61 und entsprechend über die Exzenter 58 und 59 die Winkellage der Kulissenteile 46 und 47 und die Relativlage derselben zu der jeweiligen Kulisse 48, 49 bezüglich der Grundausrichtung in der Zangenmaul-Offenstellung eingestellt werden, aus welcher Grundstellung heraus im Zuge der üblichen Nutzung der Abisolierzange 1 eine weitere automatische Anpassung an die Kabeldicke erfolgen kann.

Gemäß den Darstellungen in den Figuren 35 und 36 kann eine beispielhafte Verstellung der Exzenter 58 und 59 um 180° zur Justierung der automatischen Schneidtiefeneinstellung eine in diesen Darstellungen gezeigte Öffnung der Schneidbacken 22 und 23 bezüglich eines Öffnungswinkels γ um ein Viertel bis ein Achtel, weiter beispielsweise etwa einem Sechstel des Winkelmaßes vergrößern.

Die Relativanordnung der ersten und zweiten Achse 51, 54 in den zugeordneten Langlöchern 52 und 55 ist hierbei unabhängig von einer Schwenkstellung der Klemmbacken 19, 20 beziehungsweise der Zangenbacken 2 und 3.

Die Abisolierzange 1 kann mit nachfolgend näher beschriebenen Klemmbacken 19 und 20 und/oder nachstehend näher beschriebenen Schneiden 17 versehen sein.

Die Schneiden 24, 25 der Schneidbacken 22, 23 können über stirnseitig zu bedienende Schrauben 67 an der jeweiligen Schneidbacke 22 beziehungsweise 23 festlegbar sein.

Hierzu kann jede zumindest im Wesentlichen plattenförmig gebildete Schneide 24, 25 eine von der jeweiligen Schraube 67 zu durchsetzende Bohrung 68 aufweisen.

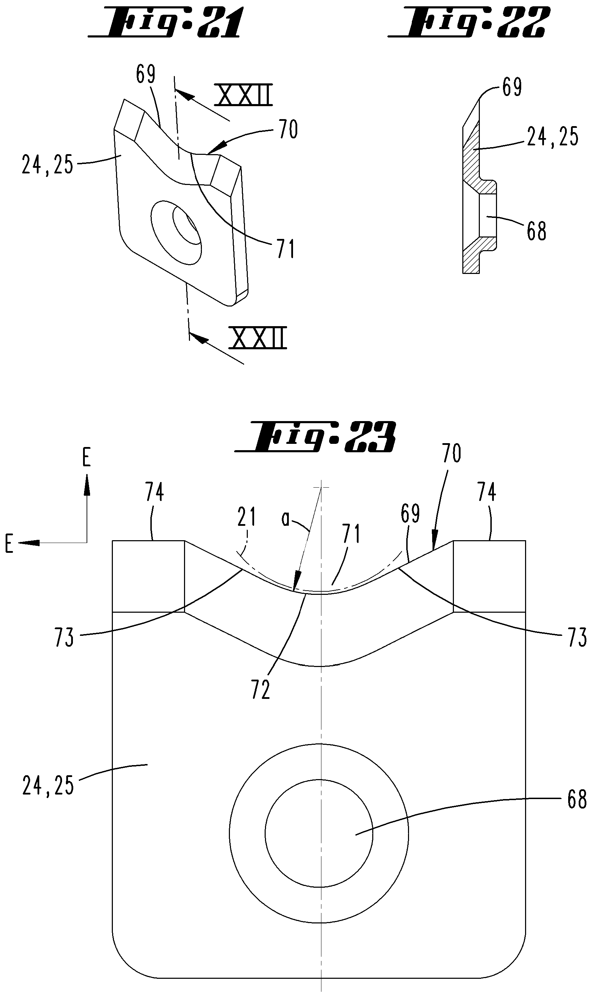

Die Schneide 24, 25 weist eine im Nutzungszustand in Richtung auf das Zangenmaul M weisende Schneidenspitze 69 auf, mit einem im Querschnitt gemäß der Darstellungen in den Figuren 21 und 22 in einem spitzen Winkel auslaufenden Ende, das in einer Seitenansicht gemäß Figur 23 eine Konturlinie 70 bildet. In der Seitenansicht gemäß Figur 23 bildet die Konturlinie 70 zugleich eine Abschlusslinie der Schneide 17.

Die Konturlinie 70 kann eine Einsenkung 71 aufweisen. Diese erscheint in einem in Längserstreckung der Konturlinie 70 betrachteten mittigen Bereich als stetig gekrümmte Linie (gekrümmter Bereich 72), bevorzugt einer Kreislinie, mit einem Radius a, an die sich bevorzugt beidseitig unter Fortsetzung der Umschließung eines eingelegten Kabels 21 eine Linie beziehungsweise Abschnitt 73 mit geringerer Krümmung anschließt. Gemäß dem dargestellten Ausführungsbeispiel kann diese sich an die mittige gekrümmte Linie anschließende Linie beidseitig der Krümmung eine Gerade sein, so dass sich insgesamt eine im Wesentlichen V-förmige Einsenkung 71 der Konturlinie 70 ergibt, mit einer entsprechend mit dem Radius a verrundeten V-Spitze.

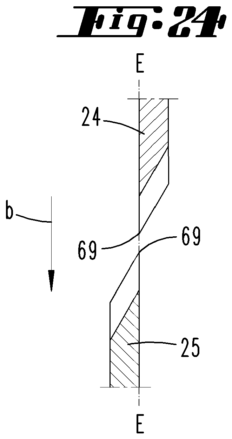

Die sich an die verrundete Kontur im Bereich 72 anschließende Konturlinie im Abschnitt 73 kann sich, bezogen auf eine Schneidrichtung b einer Schneidebene E in Richtung der Schneidrichtung b fortsetzen (vergleiche Figur 24). Sie steigt entsprechend beim Ausführungsbeispiel und mit Bezug zu Fig. 29 ausgehend von der Einsenkung in der Schneidrichtung b nach oben an bzw. fällt nach unten ab.

Die Einsenkung 71 begrenzend setzt sich die Konturlinie 70 bevorzugt beidseitig der Einsenkung 71 fort in gerade verlaufende Abschnitte 73, 74, die entsprechend einer gemeinsamen, quer zur Schneidrichtung b verlaufenden Gerade verlaufen können.

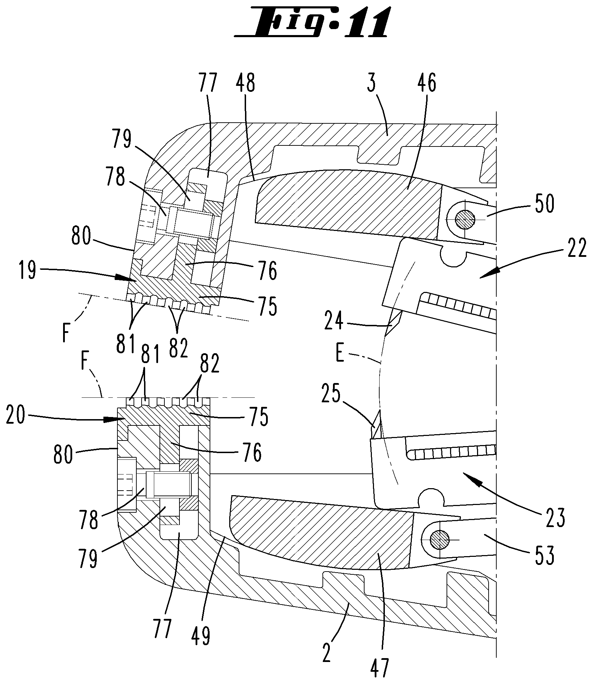

Die Konturlinie 70 setzt sich hierbei auch in einer Ebenenerstreckung der - in Strenge gekrümmt verlaufenden, siehe Figuren 3 und 11 - Schneidebene E fort, vergl. Fig. 23. Die Konturlinie 70 erstreckt sich damit auch in der Breite und der Höhe und zwar bevorzugt relativ weniger stark in der Höhe als im Bereich der verrundeten Kontur und relativ stark in der Breite als im Bereich der verrundeten Kontur.

Jede Klemmbacke 19 beziehungsweise 20 kann, wie dargestellt, zunächst einen plattenförmigen Grundkörper 75 aufweisen, mit zwei gegenüberliegenden Breitseitenflächen. Von einer Breitseitenfläche ragt bei etwa mittiger Anordnung ein Befestigungsfortsatz 76 senkrecht ab. Dieser kann plattenartig gebildet sein mit einer im Einbauzustand quer zu einer Ausrichtung eines zu ergreifenden Kabels 21 zwischen den Klemmbacken 19 und 20 sich erstreckenden Plattenebene.

Mittels des Befestigungsfortsatzes 76 ist eine Befestigung der Klemmbacke 19 beziehungsweise 20 an der zugeordneten Zangenbacke 2 beziehungsweise 3 ermöglicht, zufolge Einschub des Befestigungsfortsatzes 76 in eine entsprechend ausgebildete Aufnahmetasche 77 der Zangenbacke 2, 3.

Die Festlegung an der Zangenbacke 2, 3 erfolgt zufolge einer Verschraubung. Die diesbezügliche Befestigungsschraube 78 durchsetzt hierzu eine entsprechende Bohrung in der Zangenbacke 2, 3 sowie ein Langloch 79 in dem Befestigungsfortsatz 76, wobei die Schraubbefestigung der Klemmbacke 19, 20 von einer Stirnfläche 80 der jeweiligen Zangenbacke 2, 3 aus erfolgt.

Beide Klemmbacken 19 und 20 sind bezüglich der in Einbausituation aufeinander zu weisenden Breitseiten der Grundkörper 75 mit quer zu einem zwischen die Klemmbacken 19 und 20 klemmzuhalternden Kabel 21 verlaufenden Rippen 81 versehen. Zwischen diesen Rippen 81 verlaufen nutartige Ausnehmungen 82 mit jeweils einem Ausnehmungsboden 83.

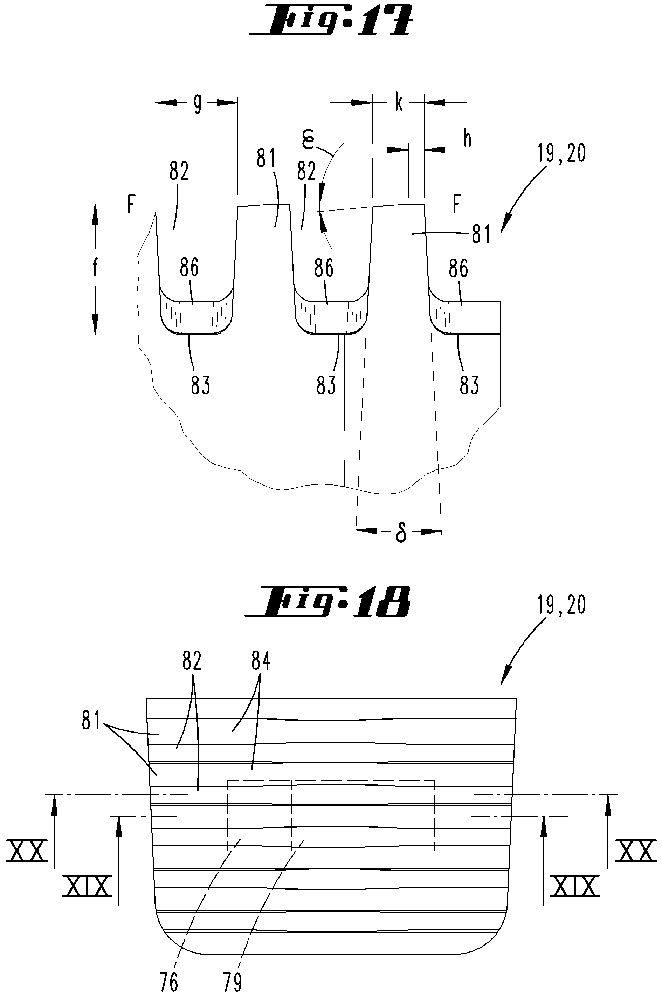

Gemäß dem dargestellten Ausführungsbeispiel, und bevorzugt, können je Klemmbacke 19, 20 beispielsweise sechs solcher Rippen 81 vorgesehen sein, die quer zur Längserstreckung der Rippen 81 betrachtet gleichmäßig zueinander beabstandet sind, vergleiche auch Figur 18. Weiter sind die Rippen 81 so angeordnet, dass diese, in Abhängigkeit von einer Dicke des zu klemmenden Kabels 21, aber auch ohne Einlegen eines Kabels 21, kammartig in die Ausnehmungen 82 der gegenüberliegenden Klemmbacke einfahren können.

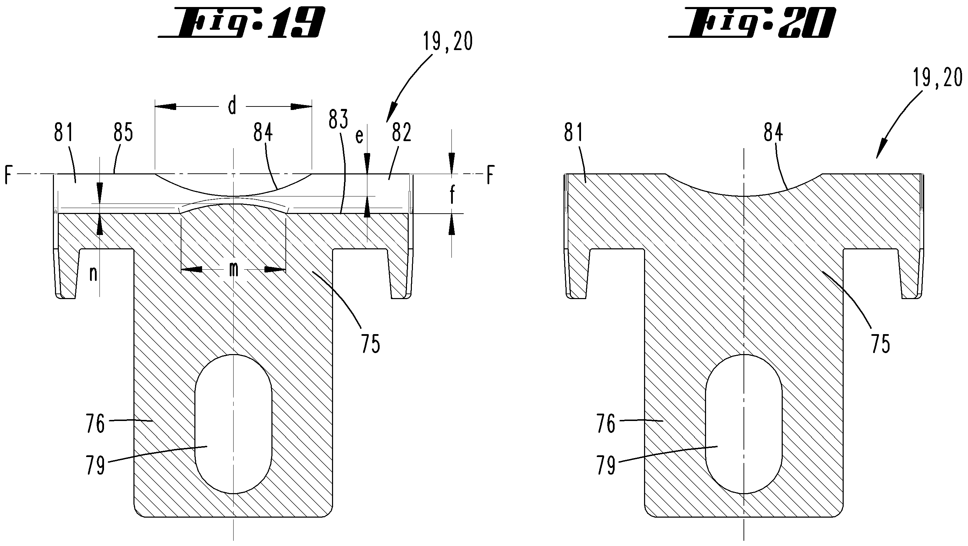

Alle Rippen 81 beider Klemmbacken 19 und 20 können, wie dargestellt, auf einem Teil ihrer Längserstreckung, weiter bevorzugt mittig ihrer Längserstreckung, eine konkave Ausbuchtung 84 aufweisen. Hieraus ergibt sich bei bevorzugt in einer Längserstreckung eines eingelegten Kabels betrachtet fluchtender Anordnung der Ausnehmungen 84 und über alle Rippen 81 betrachtet eine im Wesentlichen mittige wannenförmige Senke - im Sinne einer Hüllfläche über die Konturlinien der Ausbuchtungen in der genannten Längserstreckung - bezüglich der in Richtung auf das Zangenmaul M weisenden Rippenoberfläche 85. Hierzu wird auch auf die Figuren 19 und 20 verwiesen.

Die Rippenoberfläche 85 beidseitig der Ausbuchtungen 84 spannen insgesamt eine ebene Klemmfläche F auf.

Die in Erstreckungsrichtung einer Rippe 81 betrachtete Breite d einer Ausbuchtung 84 kann etwa dem halben Rippenlängserstreckungsmaß entsprechen. Die senkrecht zum Breitenmaß d betrachtete Tiefe e einer Ausbuchtung 84 kann etwa der halben maximalen, in selber Richtung betrachteten größten Tiefe f einer Ausnehmung 82 entsprechen.

Auch kann die größte Tiefe f einer Ausnehmung 82 in dem dargestellten Ausführungsbeispiel etwa dem 1,5-Fachen des quer zur Rippenlängserstreckung betrachteten freien Abstandes g zwischen zwei benachbarten Rippen 81 im Bereich ihrer Rippenoberfläche 85 entsprechen (vergleiche Figur 17).

Zudem kann jede Rippe 81, bezogen auf einen Querschnitt quer zur Längserstreckung der Rippe 81, ausgehend von dem Ausnehmungsboden 83 sich in Richtung zur Rippenoberfläche 85 konisch verjüngen. So können die, die Ausnehmung 82 begrenzenden Rippenaußenflächen zueinander einen Konuswinkel δ von etwa 15° einschließen.

Die Rippenoberfläche 85 einer jeden Rippe 81 kann sich mit Bezug quer zu einer Längserstreckung der Rippe 81 über einen Teilbereich in einer die Klemmfläche F definierenden Ebene erstrecken, so beispielsweise gemäß der Darstellung in Figur 17 über eine Länge h, die etwa einem Drittel der in die Klemmfläche F projizierten Gesamtlänge k entsprechen kann. Der über die Länge h hinausgehende Abschnitt der Rippenoberfläche 85 kann gemäß der in Figur 17 gezeigten Ausführungsform unter einem Winkel ε von etwa 5° abfallen.

Der Ausnehmungsboden 83 kann über die Länge der Ausnehmung 82 unterschiedlich tief ausgebildet sein, entsprechend unterschiedliche Maße f aufweisen. So kann, wie auch dargestellt, im Bereich der Ausbuchtung 84 ausnehmungsbodenseitig eine kuppelartige Erhöhung 86 vorgesehen sein mit einer in Längserstreckung der Ausnehmung 82 betrachteten Breite m, die etwa einem Drittel der Gesamtlänge der Ausnehmung 82 beziehungsweise einer Rippe 81 entsprechen kann und einer Höhe n über das Niveau des sich an die Erhöhung 86 anschließenden Bereichs des Ausnehmungsbodens 83, welche Höhe n etwa einem Drittel bis einem Fünftel der größten Tiefe f der Ausnehmung 82 entsprechen kann.

Die Anordnung und die Abmaße von Ausbuchtung 84 und Erhöhung 86 können weiter so gewählt sein, dass selbst im Bereich der Erhöhung 86 die Ausbuchtung 84 nicht den Ausnehmungsboden 83 erreicht.

### Liste der Bezugszeichen

| | | | |
|---|---|---|---|
| 1 | Abisolierzange | 29 | Anschlagschlitten |
| 2 | feststehende Zangenbacke | 30 | Zugstange |
| 3 | bewegliche Zangenbacke | 31 | Ausnehmung |
| 4 | feststehendes Griffteil | 32 | Einfahröffnung |
| 5 | bewegliches Griffteil | 33 | Zugachse |
| 6 | Wangenbereich | 34 | Langloch |
| 7 | Drehachse | 35 | Hülse |
| 8 | Schulterbereich | 36 | Halterungsteil |
| 9 | Vorsprungbereich | 37 | Hülsenwandung |
| 10 | Abstützfläche | 38 | Langloch |
| 11 | Steuerhebel | 39 | Feder |
| 12 | Rolle | 40 | Boden |
| 13 | Ausleger | 41 | Schulter |
| 14 | Rückstellfeder | 42 | Höhlung |
| 15 | Vorsprungbereich | 43 | Höhlungsboden |
| 16 | Lenker | 44 | Rastvorsprung |
| 17 | Schneide | 45 | Rastausnehmung |
| 18 | freigeschnittener Bereich | 46 | Kulissenteil |
| 19 | Klemmbacke | 47 | Kulissenteil |
| 20 | Klemmbacke | 48 | Kulisse |
| 21 | Kabel | 49 | Kulisse |
| 22 | Schneidbacke | 50 | Koppelstange |
| 23 | Schneidbacke | 51 | erste Achse |
| 24 | Schneide | 52 | erstes Langloch |
| 25 | Schneide | 53 | Koppelstange |
| 26 | Schneidbacken-Paar | 54 | zweite Achse |
| 27 | Schwenkachse | 55 | zweites Langloch |
| 28 | Feder | 56 | Isolationsabschnitt |
| 57 | Exzenterteil | 84 | Ausbuchtung |
| 58 | erster Exzenter | 85 | Rippenoberfläche |
| 59 | zweiter Exzenter | 86 | Erhöhung |
| 60 | Schraubbolzen | | |
| 61 | Handhabe | a | Radius |
| 62 | Ausnehmung | b | Schneidrichtung |
| 63 | erster Lenker | c | Pfeil |
| 64 | zweiter Lenker | d | Breite |
| 65 | Steuerbereich | e | Tiefe |
| 66 | Steuerbereich | f | Tiefe |
| 67 | Schraube | g | Abstand |
| 68 | Bohrung | h | Länge |
| 69 | Schneidenspitze | k | Gesamtlänge |
| 70 | Konturlinie | m | Breite |
| 71 | Einsenkung | n | Höhe |
| 72 | gekrümmter Bereich | r | Verschieberichtung |
| 73 | Abschnitt | x | geometrische Drehachse |
| 74 | Abschnitt | y | geometrische Achse |
| 75 | Grundkörper | z | geometrische Achse |
| 76 | Befestigungsfortsatz | E M | Schneidebene |
| 77 | Aufnahmetasche | F | Klemmfläche |
| 78 | Befestigungsschraube | | Zangenmaul |
| 79 | Langloch | α | Winkel |
| 80 | Stirnfläche | β | Winkel |
| 81 | Rippe | γ | Öffnungswinkel |
| 82 | Ausnehmung | δ | Konuswinkel |
| 83 | Ausnehmungsboden | ε | Winkel |

## Patentansprüche

1. nspruch 1 1. Abisolierzange (1) mit zwei Zangenbacken (2, 3), zwei äußeren Klemmbacken (19, 20), zwei inneren Schneidbacken (22, 23) und zwei Griffteilen (4, 5), wobei die Schneidbacken (22, 23) durch eine Zugstange (30) im Zuge eines Zusammendrückens der Griffteile (4, 5) aus einer Ausgangsstellung in eine Endstellung verlagerbar sind, wobei weiter eine Zangenbacke (2) feststehend ist und eine Zangenbacke (3) beweglich, zufolge einer Drehbewegung relativ zu der feststehenden Zangenbacke (2), wobei weiter die Schneidbacken (22, 23) in ihrer Verlagerungsrichtung (r) an zwei in der Verlagerungsrichtung (r) beweglichen Kulissenteilen (46, 47), einem ersten Kulissenteil (46), einwirkend auf die der beweglichen Zangenbacke (3) zugeordnete Schneidbacke (22), und einem zweiten Kulissenteil (47), einwirkened auf die der feststehenden Zangenbacke (2) zugeordnete Schneidbacke (23), die sich ihrerseits an einer jeweils zugeordneten klemmbackenfesten Kulisse (48, 49) abstützen, geführt sind, durch welche Kulissenteile (46, 47) die Schneidbacken (22, 23) in Abhängigkeit einer Schließstellung der Klemmbacken (19, 20), welche Schließstellung die Bewegung der Kulissenteile (46, 47) bestimmt, unterschiedlich weit aufeinander zu bewegt sind, wobei weiter eine selbsttätige Anpassung einer Schneidtiefe durch eine Relativverlagerung eines Kulissenteils (46, 47), auf welchem sich die zugeordnete Schneidbacke (22, 23) abstützt, relativ zu der zugeordneten Kulisse (48, 49) ermöglicht ist, wobei weiter das der beweglichen Zangenbacke (3) zugeordnete erste Kulissenteil (46) in der feststehenden Zangenbacke (2) über eine in einem ersten Langloch (52) geführte erste Achse (51) gelagert ist, **dadurch gekennzeichnet, dass** die Kulissenteile (46, 47) unabhängig von einer Schließstellung der Klemmbacken (19, 20) bezüglich einer Stellung relativ zu der Kulisse (48, 49) zusätzlich manuell einstellbar sind, bei einer gleichen Einwirkung auf beide Kulissenteile (46, 47), dass das der feststehenden Zangenbacke (2) zugeordnete zweite Kulissenteil (47) in der beweglichen Zangenbacke (3) über eine in einem zweiten Langloch (55) geführte zweite Achse (54) gelagert ist, dass zur Ermöglichung einer Justierung der automatischen Schneidtiefenanpassung der Schneiden (24, 25) der Schneidbacken (22, 23) ein zentrales Verstellmittel vorgesehen ist, dass das Verstellmittel ein einstückig ausgebildetes Exzenterteil (57) mit zwei in Achsrichtung des Exzenterteils (57) zueinander beabstandeten, einem ersten (58) und einem zweiten (59), Exzentern ist, dass der erste und der zweite Exzenter (58, 59) mit einer gemeinsamen Drehachse (x) ausgebildet sind und dass zur mittelbaren Zusammenwirkung der Exzenter (58, 59) mit den Kulissenteilen (46, 47) der erste und der zweite Exzenter (58, 59) mittels eines ersten (63) und eines zweiten Lenkerteils (64) mit der ersten bzw. zweiten Achse (51, 54) verbunden sind.

## Claims

1. Stripping pliers (1) comprising two plier jaws (2, 3), two outer clamping jaws (19, 20), two inner cutting jaws (22, 23) and two grip parts (4, 5), wherein the cutting jaws (22, 23) are displaceable by means of a traction rod (30), in the course of squeezing together the grip parts (4, 5), from an initial position into an end position, wherein furthermore one plier jaw (2) is stationary and one plier jaw (3) is movable as a result of a rotational movement relative to the stationary plier jaw (2), wherein furthermore the cutting jaws (22, 23), in their direction of displacement (r), are guided on two cam parts (46, 47) which are movable in the direction of displacement (r), namely on a first cam part (46) acting on the cutting jaw (22) associated with the movable plier jaw (3) and on a second cam part (47) acting on the cutting jaw (23) associated with the stationary plier jaw (2), which cam parts in turn are supported on a respectively associated clamping-jaw-fixed cam track (48, 49), by means of which cam parts (46, 47) the cutting jaws (22, 23), in dependence on a closed position of the clamping jaws (19, 20), which closed position determines the movement of the cam parts (46, 47), are moved towards one another to different extents, wherein furthermore an automatic adaptation of a cutting depth is enabled by a relative displacement of a cam part (46, 47), on which the associated cutting jaw (22, 23) is supported, relative to the associated cam track (48, 49), wherein furthermore the first cam part (46) associated with the movable plier jaw (3) is mounted in the stationary plier jaw (2) via a first shaft (51) guided in a first elongated hole (52),
**characterised in that** the cam parts (46, 47) are additionally manually adjustable, independently of a closed position of the clamping jaws (19, 20), with respect to a position relative to the cam track (48, 49), with the same action on both cam parts (46, 47), **in that** the second cam part (47) associated with the stationary plier jaw (2) is mounted in the movable plier jaw (3) via a second shaft (54) guided in a second elongated hole (55), **in that**, to enable an adjustment of the automatic cutting-depth adaptation of the cutting edges (24, 25) of the cutting jaws (22, 23), a central adjusting means is provided, **in that** the adjusting means is a one-piece eccentric part (57) having two eccentrics, namely a first eccentric (58) and a second eccentric (59), which are spaced apart from one another in the axial direction of the eccentric part (57), **in that** the first and the second eccentric (58, 59) are formed with a common axis of rotation (x), and **in that**, for indirect interaction of the eccentrics (58, 59) with the cam parts (46, 47), the first and the second eccentric (58, 59) are connected to the first and second shaft (51, 54), respectively, by means of a first (63) and a second link member (64).

## Revendications

1. Pince à dénuder (1) comprenant deux mâchoires de pince (2, 3), deux mâchoires de serrage externes (19, 20), deux mâchoires de coupe internes (22, 23) et deux parties de préhension (4, 5), les mâchoires de coupe (22, 23) étant déplaçables au moyen d'une tige de traction (30), lors du rapprochement des parties de préhension (4, 5), d'une position initiale vers une position terminale, une mâchoire de pince (2) étant en outre fixe et une mâchoire de pince (3) mobile à la suite d'un mouvement de rotation par rapport à la mâchoire de pince fixe (2), les mâchoires de coupe (22, 23) étant en outre guidées, dans leur direction de déplacement (r), sur deux pièces à coulisse (46, 47) mobiles dans la direction de déplacement (r), à savoir sur une première pièce à coulisse (46) agissant sur la mâchoire de coupe (22) associée à la mâchoire de pince mobile (3) et sur une seconde pièce à coulisse (47) agissant sur la mâchoire de coupe (23) associée à la mâchoire de pince fixe (2), lesquelles pièces à coulisse s'appuient à leur tour sur une coulisse fixe par rapport à la mâchoire de serrage correspondante (48, 49), au moyen desquelles pièces à coulisse (46, 47) les mâchoires de coupe (22, 23) sont déplacées l'une vers l'autre, à des degrés différents, en fonction d'une position de fermeture des mâchoires de serrage (19, 20), laquelle position de fermeture détermine le mouvement des pièces à coulisse (46, 47), une adaptation automatique d'une profondeur de coupe étant en outre rendue possible par un déplacement relatif d'une pièce à coulisse (46, 47), sur laquelle s'appuie la mâchoire de coupe associée (22, 23), par rapport à la coulisse associée (48, 49), la première pièce à coulisse (46) associée à la mâchoire de pince mobile (3) étant en outre montée dans la mâchoire de pince fixe (2) au moyen d'un premier axe (51) guidé dans une première lumière oblongue (52),
**caractérisée en ce que** les pièces à coulisse (46, 47) sont en outre réglables manuellement, indépendamment d'une position de fermeture des mâchoires de serrage (19, 20), quant à une position relative par rapport à la coulisse (48, 49), avec une action identique sur les deux pièces à coulisse (46, 47), **en ce que** la seconde pièce à coulisse (47) associée à la mâchoire de pince fixe (2) est montée dans la mâchoire de pince mobile (3) au moyen d'un second axe (54) guidé dans une seconde lumière oblongue (55), **en ce que**, pour permettre un réglage de l'adaptation automatique de la profondeur de coupe des tranchants (24, 25) des mâchoires de coupe (22, 23), un moyen de réglage central est prévu, **en ce que** le moyen de réglage est une pièce excentrique (57) monobloc présentant deux excentriques, à savoir un premier excentrique (58) et un second excentrique (59), qui sont espacés l'un de l'autre dans la direction axiale de la pièce excentrique (57), **en ce que** le premier et le second excentrique (58, 59) sont formés avec un axe de rotation commun (x), et **en ce que**, pour l'interaction indirecte des excentriques (58, 59) avec les pièces à coulisse (46, 47), le premier et le second excentrique (58, 59) sont reliés respectivement au premier et au second axe (51, 54) au moyen d'un premier (63) et d'un second organe de liaison (64).
